# EUROPÄISCHE PATENTSCHRIFT

(11) **EP 3 136 868 B1**
(45) Veröffentlichungstag und Bekanntmachung des Hinweises auf die Patenterteilung: **06.03.2019**
(21) Anmeldenummer: 15721611.0
(22) Anmeldetag: 28.04.2015
(51) Int. Cl.: A21C 15/00

(54) **ANLAGE UND VERFAHREN ZUR BILDUNG VON WAFFELBLÖCKEN**
SYSTEM AND METHOD FOR FORMING WAFER BLOCKS
INSTALLATION ET PROCÉDÉ DE PRODUCTION DE BLOCS DE GAUFRETTES

(30) Priorität: 29.04.2014 AT 3112014
(43) Veröffentlichungstag der Anmeldung: 08.03.2017
(73) Patentinhaber: Haas Food Equipment GmbH, 1210 Wien (AT)
(72) Erfinder: DOLKOWSKI, Michael, 2500 Baden (AT); HAAS, Johannes, 1040 Wien (AT); HAAS, Josef, 2100 Leobendorf (AT); JIRASCHEK, Stefan, 2202 Königsbrunn (AT); KREINER, Florian, 3474 Altenwörth (AT); REITHNER, Jürgen, 3562 Schönberg am Kamp (AT)
(74) Vertreter: Puchberger & Partner Patentanwälte
(86) Internationale Anmeldenummer: PCT/EP2015/059147
(87) Internationale Veröffentlichungsnummer: WO 2015/165877

(56) Entgegenhaltungen:
- WO-A1-97/47204
- AT-B- 382 298
- US-A- 5 201 403

## Beschreibung

Die Erfindung betrifft eine Anlage und ein Verfahren zur Bildung von Waffelblöcken, wobei die Waffelblöcke zumindest drei Waffelblätter und zumindest zwei Cremelagen aus zwei verschiedenen Cremen umfassen, wobei die Waffelblätter und die Cremelagen abwechselnd und parallel aufeinander liegend angeordnet sind.

Insbesondere betrifft die Erfindung eine Anlage, in der Waffelblöcke als Zwischenprodukte zur Herstellung von Waffelprodukten wie beispielsweise Schnitten hergestellt werden.

Vorrichtungen zur Bildung von Waffelblöcken sind seit langer Zeit bekannt und in unterschiedlichen Ausführungsformen publiziert.

Beispielsweise sind Anlagen bekannt, bei denen Stoß an Stoß liegende Waffelblätter entlang einer geradlinig verlaufenden Förderfläche mit einer Schokoladecreme bestrichen werden. In einem weiteren Schritt wird zur Bildung eines Waffelblocks ein mit einer Creme bestrichenes Waffelblatt mit einem unbestrichenen Waffelblatt zusammengefügt, sodass ein sogenanntes Waffelsandwich entsteht. Dieses Waffelsandwich umfasst ein Waffelgrundblatt sowie ein Waffeldeckblatt und eine dazwischen liegende Schicht aus einer Creme. Eine derartige Vorrichtung, auch Sandwichformer bezeichnet, ist beispielsweise aus der AT511406A1 bekannt.

Um einen mehrlagigen Waffelblock zu bilden, werden nun, gemäß Stand der Technik, weitere bestrichene Waffelblätter einer Stapelstation zugeführt und mit dem Waffelsandwich in Kontakt gebracht, sodass ein mehrlagig aufgebauter Waffelblock entsteht, der immer ein Waffeldeckblatt, ein Waffelgrundblatt, Zwischenwaffelblätter und dazwischen angeordnete Cremeschichten umfasst. Eine derartige Vorrichtung, auch Stapelvorrichtung bezeichnet, ist beispielsweise aus der AT511407A1bekannt.

Herkömmliche Anlagen sind jedoch dadurch begrenzt, dass nur eine einzige Creme als Material für die Cremelagen verwendbar ist. Um mehrere unterschiedliche Cremelagen aus unterschiedlichen Cremen in einen Waffelblock einzubringen, können gemäß Stand der Technik entlang der ersten, geradlinig verlaufenden Förderfläche mehrere Streichköpfe vorgesehen sein, wobei die unterschiedlichen Streichköpfe unterschiedliche Cremen auf ein Waffelblatt streichen können. Nachteilig an dieser Konstruktion ist, dass der Streichvorgang nicht exakt gestoppt werden kann, sodass es zu einer Vermischung der Cremen am Waffelblatt kommt. Diese Vermischung ist am fertigen Produkt zu sehen, wodurch diese Produkte als Ausschuss aus dem Produktionsprozess entfernt werden müssen.

Eine Anlage zur Anordnung mehrerer unterschiedlicher Cremeschichten zwischen Waffelblättern ist beispielsweise aus der AT382298B bekannt. Diese Anlage umfasst mehrere Streichköpfe zum Aufbringen unterschiedlicher Cremeschichten auf Waffelblöcke, sowie eine Andrückwalze zum Verbinden von gestapelten und durch Cremeschichten getrennten Waffelschichten.

Zum effizienten Bestreichen von Waffelblättern hat es sich bewährt, mit einem Streichkopf ein durchgehendes Band aus Stoß an Stoß aneinandergereihten Waffelblättern zu bestreichen. Dabei ist durch die bandförmig aneinander liegenden Waffelblätter eine durchgehende, abstandsfreie, bestreichbare Fläche gebildet. Somit können diese Blätter bis zum Rand bestrichen werden, was die Effizienz des Verfahrens und der Anlage weiter verbessert. Jedoch ist dieser durchgehende, kontinuierliche Cremeauftrag bei Stand-der-Technik-Vorrichtungen zur Herstellung von Waffelblöcken nur mit einer einzigen Creme möglich.

Aufgabe der Erfindung ist es nun, die Nachteile des Standes der Technik zu überwinden. Insbesondere ist es Aufgabe der Erfindung, eine Anlage und ein Verfahren zur Bildung von Waffelblöcken mit zumindest zwei Cremelagen aus zwei verschiedenen Cremen zu schaffen, dessen Effizienz verbessert ist, wobei gleichzeitig die Flexibilität der Wahl der Abfolge und der Anzahl der Schichten gegeben ist. Insbesondere ist es Aufgabe der Erfindung, eine Anlage und ein Verfahren zu schaffen, bei der Waffelblöcke flexibel mit unterschiedlichem Aufbau, das heißt mit wählbarer Anzahl und wählbarer Abfolge unterschiedlicher Cremeschichten effizient herstellbar sind.

Die erfindungsgemäße Aufgabe wird insbesondere durch die Merkmale der unabhängigen Patentansprüche gelöst.

Die Erfindung betrifft insbesondere eine Anlage zur Bildung von Waffelblöcken, wobei die Waffelblöcke zumindest drei Waffelblätter und zumindest zwei Cremelagen aus zwei verschiedenen Cremen umfassen, wobei die Waffelblätter und die Cremelagen abwechselnd und parallel aufeinander liegend angeordnet sind,
umfassend: eine Eingangsstation, an der einzelne Waffelblätter, bevorzugt kommend von einer Waffelbackmaschine, nacheinander an die Anlage übergeben werden, eine erste Förderfläche zum Transport von ersten Waffelblättern, wobei im Verlauf der ersten Förderfläche eine erste Streichstation zum Auftragen einer ersten Cremelage aus einer ersten Creme auf die ersten Waffelblätter vorgesehen ist, eine zweite Förderfläche zum Transport von zweiten Waffelblättern, wobei im Verlauf der zweiten Förderfläche eine zweite Streichstation zum Auftragen einer zweiten Cremelage aus einer zweiten Creme auf die zweiten Waffelblätter vorgesehen ist, eine dritte Förderfläche zum Transport von dritten Waffelblättern, eine Stapelstation, an der die ersten Waffelblätter mit ihren ersten Cremelagen, die zweiten Waffelblätter mit ihren zweiten Cremelagen und die dritten Waffelblätter zu einem oder mehreren Waffelblöcken gestapelt werden, eine Eingangsweichenanordnung, über die die Waffelblätter der Eingangsstation wahlweise an die erste Förderfläche, an die zweite Förderfläche oder an die dritte Förderfläche übergeben werden, und eine Ausgangsweichenanordnung, über die die Waffelblätter der ersten Förderfläche, der zweiten Förderfläche oder der dritten Förderfläche wahlweise an die Stapelstation übergeben werden.

Gegebenenfalls ist vorgesehen, dass die erste Förderfläche, die zweite Förderfläche und die dritte Förderfläche beabstandet voneinander nebeneinander und/oder übereinander angeordnet sind, und dass die erste Förderfläche, die zweite Förderfläche und die dritte Förderfläche durch die Eingangsweichenanordnung und die Ausgangsweichenanordnung miteinander verbindbar sind, sodass ein Waffelblatt, kommend von der Eingangsstation wahlweise über die erste Förderfläche, die zweite Förderfläche oder die dritte Förderfläche zur Stapelstation transportierbar ist.

Gegebenenfalls ist vorgesehen, dass im Verlauf der ersten Förderfläche entlang der ersten Förderrichtung vor der ersten Streichstation eine erste Zustellfördervorrichtung zum Transport der ersten Waffelblätter zur ersten Streichstation angeordnet ist, dass im Verlauf der ersten Förderfläche entlang der ersten Förderrichtung im Bereich der ersten Streichstation eine erste Streichfördervorrichtung zum Transport der ersten Waffelblätter in der ersten Streichstation angeordnet ist, dass im Verlauf der ersten Förderfläche entlang der ersten Förderrichtung nach der ersten Streichstation eine erste Abführfördervorrichtung zum Transport der ersten Waffelblätter und der darauf aufgebrachten ersten Cremelage von der ersten Streichstation zur Stapelstation angeordnet ist und/oder dass die Transportgeschwindigkeit der ersten Streichfördervorrichtung kleiner ist als die Transportgeschwindigkeit der ersten Zustellfördervorrichtung und/oder kleiner ist als die Transportgeschwindigkeit der ersten Abführfördervorrichtung, sodass die nacheinander auf der ersten Förderfläche transportierten ersten Waffelblätter im Bereich der ersten Streichstation einen geringeren Abstand zueinander aufweisen als im Verlauf der ersten Förderfläche vor und/oder nach der ersten Streichstation.

Gegebenenfalls ist vorgesehen, dass im Verlauf der zweiten Förderfläche entlang der zweiten Förderrichtung vor der zweiten Streichstation eine zweite Zustellfördervorrichtung zum Transport der zweiten Waffelblätter zur zweiten Streichstation angeordnet ist, dass im Verlauf der zweiten Förderfläche entlang der zweiten Förderrichtung im Bereich der zweiten Streichstation eine zweite Streichfördervorrichtung zum Transport der zweiten Waffelblätter in der zweiten Streichstation angeordnet ist, dass im Verlauf der zweiten Förderfläche entlang der zweiten Förderrichtung nach der zweiten Streichstation eine zweite Abführfördervorrichtung zum Transport der zweiten Waffelblätter und der darauf aufgebrachten zweiten Cremelage von der zweiten Streichstation zur Stapelstation angeordnet ist und/oder dass die Transportgeschwindigkeit der zweiten Streichfördervorrichtung kleiner ist als die Transportgeschwindigkeit der zweiten Zustellfördervorrichtung und/oder kleiner ist als die Transportgeschwindigkeit der zweiten Abführfördervorrichtung, sodass die nacheinander auf der zweiten Förderfläche transportierten zweiten Waffelblätter im Bereich der zweiten Streichstation einen geringeren Abstand zueinander aufweisen als im Verlauf der zweiten Förderfläche vor und/oder nach der zweiten Streichstation.

Gegebenenfalls ist vorgesehen, dass die Geschwindigkeitsdifferenz zwischen der Transportgeschwindigkeit der Zustellfördervorrichtung minus der Transportgeschwindigkeit der Streichfördervorrichtung im Wesentlichen dem Wert des Maßes des Abstandes zwischen zwei nacheinander auf der Zustellfördervorrichtung beförderten Waffelblätter entspricht, sodass die Waffelblätter in der Streichstation im Wesentlichen Stoß an Stoß liegen und eine durchgehende, abstandsfreie, bestreichbare Fläche bilden.

Gegebenenfalls ist vorgesehen, dass die Geschwindigkeitsdifferenz zwischen der Transportgeschwindigkeit im Bereich der Abführfördervorrichtung minus der Transportgeschwindigkeit im Bereich der Streichfördervorrichtung im Wesentlichen dem Wert des Maßes des Abstandes zwischen zwei nacheinander auf der Abführfördervorrichtung beförderter Waffelblätter entspricht, sodass die Waffelblätter, die in der Streichstation im Wesentlichen Stoß an Stoß liegen und eine durchgehende, abstandsfreie, bestreichbare Fläche bilden, im Bereich der Abführfördervorrichtung einen Abstand zueinander aufweisen, um beabstandet zueinander in die Stapelstation befördert zu werden.

Gegebenenfalls ist vorgesehen, dass im Bereich der Stapelstation eine Stapelfördervorrichtung vorgesehen ist, und dass die Geschwindigkeitsdifferenz zwischen der Transportgeschwindigkeit im Bereich der Stapelfördervorrichtung minus der Transportgeschwindigkeit im Bereich der Streichfördervorrichtung im Wesentlichen dem Wert des Maßes des Abstandes zwischen zwei nacheinander auf der Stapelfördervorrichtung beförderter und von einer Förderfläche kommender Waffelblätter entspricht.
Gegebenenfalls ist vorgesehen, dass der Abstand zwischen zwei nacheinander auf der Abführfördervorrichtung beförderter Waffelblätter größer ist als das Abmaß eines Waffelblattes in Förderrichtung, sodass über die Ausgangsweichenanordnung ein zweites Waffelblatt der zweiten Förderfläche zwischen zwei erste Waffelblätter der ersten Förderfläche positioniert werden kann und/oder sodass über die Ausgangsweichenanordnung ein erstes Waffelblatt der ersten Förderfläche zwischen zwei zweite Waffelblätter der zweiten Förderfläche positioniert werden kann.

Gegebenenfalls ist vorgesehen, dass der Transport der Waffelblätter in der Eingangsstation, der Stapelstation und den Streichstationen kontinuierlich erfolgt und dass die bestrichenen Waffelblätter entlang der jeweiligen Förderfläche linear aneinandergereiht transportiert werden.

Gegebenenfalls ist vorgesehen, dass die Transportgeschwindigkeit der Stapelfördervorrichtung größer ist als die Transportgeschwindigkeit der Streichfördervorrichtung, und insbesondere größer oder gleich ist als oder wie die Summe der durchschnittlichen Transportgeschwindigkeiten der ersten Förderfläche plus der Transportgeschwindigkeiten der zweiten Förderfläche plus der Transportgeschwindigkeiten der dritten Förderfläche, sodass die Waffelblätter beabstandet zueinander in die Stapelstation befördert werden.

Gegebenenfalls ist vorgesehen, dass die Zustellfördervorrichtung, die Streichfördervorrichtung, die Abführfördervorrichtung und/oder die Stapelfördervorrichtung einen oder mehrere Bandförderer, einen oder mehrere Riemenförderer einen oder mehrere Saugbandförderer oder eine ähnliche Fördervorrichtung umfasst oder umfassen.

Gegebenenfalls ist vorgesehen, dass die Eingangsweichenanordnung und/oder die Ausgangsweichenanordnung eine Weichenanordnung wie eine schwenkbare Platte, einen schwenkbaren Bandförderer, einen schwenkbaren Riemenförderer, einen schwenkbaren Saugbandförderer, zueinander geneigte und in oder gegen die Förderrichtung zusammenlaufende Förderflächen, einen Elevator und/oder eine Überdruckquelle zur Veränderung der Bewegungsrichtung und zur Anhebung der Waffelblätter umfasst oder umfassen.

Gegebenenfalls ist vorgesehen, dass die Eingangsweichenanordnung und/oder die Ausgangsweichenanordnung mehrere Weichenanordnungen umfasst oder umfassen. Gegebenenfalls ist vorgesehen, dass eine erste Eingangsweiche vorgesehen ist, die eine erste Stellung aufweist, bei der Waffelblätter, kommend von der Eingangsstation, an die erste Förderfläche übergeben werden, und die eine zweite Stellung aufweist, bei der Waffelblätter, kommend von der Eingangsstation, an die zweite Förderfläche übergeben werden.

Gegebenenfalls ist vorgesehen, dass eine zweite Eingangsweiche vorgesehen ist, die eine erste Stellung aufweist, bei der Waffelblätter, kommend von der Eingangsstation und/oder von der ersten Eingangsweiche, entlang der zweiten Förderfläche weitertransportiert werden und die eine zweite Stellung aufweist, in der Waffelblätter, kommend von der Eingangsstation und/oder von der ersten Eingangsweiche, an die dritte Förderfläche übergeben werden.

Gegebenenfalls ist vorgesehen, dass eine erste Ausgangsweiche vorgesehen ist, die eine erste Stellung aufweist, in der erste Waffelblätter, kommend von der ersten Streichstation an die Stapelfördervorrichtung übergeben werden
und die eine zweite Stellung aufweist, in der zweite Waffelblätter, kommend von der zweiten Streichstation an die Stapelfördervorrichtung übergeben werden.

Gegebenenfalls ist vorgesehen, dass die Stapelstation eine Spiralstapelvorrichtung, eine Fallschacht-Stapelvorrichtung oder eine Kombination aus einer Sandwichingvorrichtung und einer Stapelvorrichtung umfasst.

Gegebenenfalls ist vorgesehen, dass die Stapelstation eine Sandwichingvorrichtung umfasst, durch die ein mit einer ersten Creme bestrichenes erstes Waffelblatt oder ein mit einer zweiten Creme bestrichenes zweites Waffelblatt mit einem unbestrichenen dritten Waffelblatt bedeckt wird, sodass ein Waffelsandwich umfassend ein Waffelgrundblatt ein Waffeldeckblatt und eine dazwischenliegende Cremeschicht gebildet ist.
Gegebenenfalls ist vorgesehen, dass eine zweite Ausgangsweiche vorgesehen ist, über die die dritten Waffelblätter, kommend von der dritten Förderfläche, an die Stapelfördervorrichtung übergeben werden und insbesondere direkt in eine Sandwichingvorrichtung transportiert werden, um dort mit einem ersten Waffelblatt umfassend eine erste Cremelage oder mit einem zweiten Waffelblatt umfassend eine zweite Cremelage zu einem Waffelsandwich zusammengeführt zu werden.

Gegebenenfalls ist vorgesehen, dass die Stapelstation eine Stapelvorrichtung umfasst, in der ein Waffelsandwich mit zumindest einem bestrichenen ersten Waffelblatt und/oder mit zumindest einem bestrichenen zweiten Waffelblatt gestapelt wird, sodass ein mehrlagiger Waffelblock gebildet ist.

Gegebenenfalls ist vorgesehen, dass die Stapelstation eine Kalibriervorrichtung oder eine Pressvorrichtung umfasst, in der die Waffelblöcke und deren Bestandteile auf eine vorbestimmte oder wählbare Höhe zusammengepresst werden.

Die Erfindung betrifft insbesondere ein Verfahren zur Bildung eines Waffelblocks, der drei Waffelblätter und zumindest zwei Cremelagen aus zwei verschiedenen Cremen umfasst, wobei die Waffelblätter und die Cremelagen abwechselnd und parallel aufeinander liegend angeordnet werden, umfassend folgende Schritte: Festlegung einer gewünschten Anzahl und einer gewünschten Abfolge von ersten Waffelblättern mit jeweils einer ersten Cremelage aus einer ersten Creme und zweiten Waffelblättern mit jeweils einer zweiten Cremelage aus einer zweiten Creme, Befördern von Waffelblättern von der Eingangsstation zur Eingangsweichenanordnung, Wählen der Stellung der Eingangsweichenanordnung, sodass Waffelblätter wahlweise an die erste Förderfläche, an die zweite Förderfläche oder an die dritte Förderfläche übergeben werden, Auftragen der ersten Cremelage aus einer ersten Creme auf das erste Waffelblatt oder auf die ersten Waffelblätter im Verlauf der ersten Förderfläche, Auftragen der zweiten Cremelage aus einer zweiten Creme auf das zweite Waffelblatt oder auf die zweiten Waffelblätter im Verlauf der zweiten Förderfläche, Transportieren eines dritten Waffelblattes entlang der dritten Förderfläche, Transportieren der ersten Waffelblätter mit einer ersten Cremelage, der zweiten Waffelblätter mit einer zweiten Cremelage und der dritten Waffelblätter über die Ausgangsweichenanordnung an die Stapelstation, sodass das oder die ersten Waffelblätter mit ihrer ersten Cremelage, das oder die zweiten Waffelblätter mit ihrer zweiten Cremelage und das dritte Waffelblatt nacheinander und in einer der festgelegten gewünschten Anzahl und Abfolge entsprechenden Anzahl und Abfolge an die Stapelstation übergeben werden.

Gegebenenfalls umfasst das Verfahren folgende Schritte: Transportieren von Waffelblättern entlang des Verlaufs der ersten Förderfläche oder entlang der zweiten Förderfläche nacheinander über: eine Zustellfördervorrichtung zu einer Streichfördervorrichtung und weiter zu einer Abführfördervorrichtung, wobei die Waffelblätter im Bereich der Streichfördervorrichtung eine geringere Transportgeschwindigkeit aufweisen als im Bereich der Zustellfördervorrichtung und/oder im Bereich der Abführfördervorrichtung, sodass die Waffelblätter jeweils im Bereich der Zustellfördervorrichtung und/oder im Bereich der Abführfördervorrichtung einen größeren Abstand zueinander aufweisen als im Bereich der Streichfördervorrichtung.

Gegebenenfalls ist vorgesehen, dass die Geschwindigkeitsdifferenz zwischen der Transportgeschwindigkeit im Bereich der Zustellfördervorrichtung minus der Transportgeschwindigkeit im Bereich der Streichfördervorrichtung im Wesentlichen dem Wert des Maßes des Abstandes zwischen zwei nacheinander auf der Zustellfördervorrichtung beförderten Waffelblätter entspricht,
sodass die Waffelblätter in der Streichstation im Wesentlichen Stoß an Stoß liegen und eine durchgehende, abstandsfreie, bestreichbare Fläche bilden.

Gegebenenfalls ist vorgesehen, dass die Geschwindigkeitsdifferenz zwischen der Transportgeschwindigkeit im Bereich der Abführfördervorrichtung minus der Transportgeschwindigkeit im Bereich der Streichfördervorrichtung im Wesentlichen dem Wert des Maßes des Abstandes zwischen zwei nacheinander auf der Abführfördervorrichtung beförderten Waffelblätter entspricht,
sodass die Waffelblätter, die in der Streichstation im Wesentlichen Stoß an Stoß liegen und eine durchgehende, abstandsfreie, bestreichbare Fläche bilden, im Bereich der Abführfördervorrichtung einen Abstand zueinander aufweisen, um beabstandet zueinander in die Stapelstation befördert zu werden.

Gegebenenfalls ist vorgesehen, dass die Geschwindigkeitsdifferenz zwischen der Transportgeschwindigkeit im Bereich der Stapelfördervorrichtung minus der Transportgeschwindigkeit im Bereich der Streichfördervorrichtung im Wesentlichen dem Wert des Maßes des Abstandes zwischen zwei nacheinander auf der Stapelfördervorrichtung beförderten und von einer Förderfläche kommenden Waffelblättern entspricht.

Gegebenenfalls ist vorgesehen, dass der Abstand zwischen zwei nacheinander auf der Abführfördervorrichtung beförderten Waffelblättern größer ist als das Abmaß eines Waffelblattes in Förderrichtung, sodass über die Ausgangsweichenanordnung ein zweites Waffelblatt der zweiten Förderfläche zwischen zwei erste Waffelblätter der ersten Förderfläche positioniert werden kann oder sodass ein erstes Waffelblatt der ersten Förderfläche zwischen zwei Waffelblätter der zweiten Förderfläche positioniert werden kann.

Gegebenenfalls ist vorgesehen, dass die Beförderung der Waffelblätter in der Eingangsstation, der Stapelstation und den Streichstationen kontinuierlich erfolgt und dass die bestrichenen Waffelblätter entlang der jeweiligen Förderfläche linear aneinandergereiht befördert werden.

Gegebenenfalls ist vorgesehen, dass ein Waffelblock mit x ersten Waffelblättern und y zweiten Waffelblättern und einem dritten Waffelblatt gebildet wird, sodass der Waffelblock x+y+1 Waffelblätter und x+y Cremelagen umfasst.

Die erfindungsgemäße Anlage und das erfindungsgemäße Verfahren sind dazu eingerichtet, Waffelblöcke herzustellen. Als Waffeln werden insbesondere Flachwaffeln mit knusprig-spröder Konsistenz bezeichnet. Diese werden in Backzangenöfen in verriegelbaren Backzangen unter hohem Druck ausgebacken. Die aus den Waffelblöcken hergestellten Endprodukte sind beispielsweise als Schnitten oder Neapolitaner-Schnitten bekannt.

Bevorzugt werden durch das erfindungsgemäße Verfahren auf der erfindungsgemäßen Anlage Waffelblöcke mit mehreren Cremelagen hergestellt. Dabei können mehrere unterschiedliche Cremen verwendet werden. Als Cremen werden beispielsweise fettreiche, zuckerhaltige, streichbare Massen bezeichnet, die in einer Streichstation auf einzelne Waffelblätter auftragbar sind. Beispiele für derartige Cremen sind Schokoladecremen, insbesondere Schokoladecremen mit einer hellen, dunklen oder braunen Färbung. Weiters sind auch Massen wie beispielsweise Zitronencremen, Nusscremen oder ähnliche Cremen bzw. Pasten dazu geeignet, eine Cremelage des Waffelblocks zu bilden. Beispiele für Inhaltsstoffe geeigneter Cremen sind Fett, Zucker, Karamel oder auch Zusatzstoffe wie Käse, Kräuter, Aromastoffe etc.

In der Streichstation wird jeweils eine Creme auf ein Waffelblatt aufgetragen. Der Auftrag kann beispielsweise durch Riffelwalzen erfolgen. Weiters kann die Creme auch durch ein Gießverfahren auf das Waffelblatt aufgetragen werden.

Ferner umfasst die erfindungsgemäße Anlage mehrere Fördervorrichtungen. Diese Fördervorrichtungen können beispielsweise als Endlosförderer, Riemenförderer, Bandförderer, Saugbandförderer, Förderer mit Spiralgliedergurten und/oder als ähnliche Fördervorrichtungen ausgebildet sein. Insbesondere sind die Fördervorrichtungen dazu geeignet und/oder eingerichtet, Waffelblätter, gegebenenfalls bestrichene Waffelblätter, entlang einer Förderrichtung zu bewegen. Diese Bewegung geschieht mit einer gewissen Transportgeschwindigkeit. Diese Transportgeschwindigkeit ist bevorzugt durch eine Steuerung steuerbar und/oder durch eine Regelung regelbar.

Die erfindungsgemäße Anlage umfasst eine Eingangsstation. In der Eingangsstation werden einzelne Waffelblätter, die nacheinander beispielsweise von einer Waffelbackmaschine zugeführt werden, aufgenommen. Die Eingangsstation kann beispielsweise als Endlosförderer, als Förderband, als Riemenförderer oder als ähnliche Konstruktion ausgebildet sein.

Ferner umfasst die erfindungsgemäße Anlage eine Eingangsweichenanordnung. Die Eingangsweichenanordnung entspricht einer mechanischen Weiche im technischen Sinn. Diese Weiche ermöglicht die Aufteilung der von der Eingangsstation kommenden Waffelblätter auf unterschiedliche Förderflächen. Die Eingangsweichenanordnung kann beispielsweise eine oder mehrere klappenförmige oder schwenkbare Konstruktionen enthalten wie beispielsweise einen schwenkbaren Bandförderer, einen schwenkbaren Riemenförderer, mehrere Greiffinger, Überdruckdüsen oder eine Abnahmetrommel. Ferner kann die Eingangsweichenanordnung aus mehreren Weichen gebildet sein. Die Eingangsweichenanordnung ist insbesondere dazu eingerichtet, die von der Eingangsstation kommenden Waffelblätter auf mehrere Förderflächen aufzuteilen.

Die Anlage umfasst bevorzugt eine erste Förderfläche. Im Verlauf der ersten Förderfläche ist eine erste Streichstation angeordnet. Diese erste Streichstation weist bevorzugt eine Cremezuführung oder ein Cremereservoir auf. In der Streichstation wird die erste Creme auf ein erstes Waffelblatt aufgetragen, das sich auf der ersten Förderfläche bewegt.

Ferner ist bevorzugt eine zweite Förderfläche vorgesehen. Im Verlauf der zweiten Förderfläche ist eine zweite Streichstation angeordnet. Auch diese zweite Streichstation umfasst eine Zuführung oder ein Reservoir für eine zweite Creme. Die Zuführung bzw. das Reservoir der zweiten Streichstation ist bevorzugt unabhängig von der Zuführung bzw. dem Reservoir der ersten Streichstation. Somit können die beiden Streichstationen unabhängig voneinander mit unterschiedlichen Cremen beschickt werden. Dadurch kann in der zweiten Streichstation auf ein zweites Waffelblatt eine zweite Creme aufgetragen werden.

Ferner ist bevorzugt eine dritte Förderfläche vorgesehen. Im Verlauf der dritten Förderfläche sind gegebenenfalls keine Streichvorrichtungen oder Streichstationen vorgesehen. Die dritte Förderfläche ist bevorzugt dazu eingerichtet, das Waffeldeckblatt zur Bildung eines Waffelsandwichs zu befördern. Gegebenenfalls ist jedoch auch im Verlauf der dritten Förderfläche eine dritte Streichstation vorgesehen. Diese dritte Streichstation kann einen Vorratsbehälter oder eine Zuführung für eine dritte Creme enthalten.

Die Eingangsweichenanordnung ist insbesondere dazu eingerichtet, Waffelblätter, kommend von der Waffelbackmaschine und/oder der Eingangsstation wahlweise an die erste Förderfläche, die zweite Förderfläche oder die dritte Förderfläche zu leiten.

Ferner umfasst die erfindungsgemäße Anlage bevorzugt eine Ausgangsweichenanordnung. Diese Ausgangsweichenanordnung ist dazu geeignet und/oder eingerichtet, Waffelblätter kommend von der ersten Förderfläche, der zweiten Förderfläche oder der dritten Förderfläche an die Stapelstation weiter zu leiten.

Die Stapelstation ist bevorzugt eine Vorrichtung bzw. eine Anordnung mehrerer Vorrichtungen, die dazu eingerichtet ist, die Waffelblockbestandteile zu einem Waffelblock zusammenzusetzen. Insbesondere umfasst die Stapelstation einen Sandwichformer sowie eine Stapelvorrichtung. In der Stapelstation werden all jene Waffelblockbestandteile aufeinander gestapelt, die entlang der Stapelfördervorrichtung der Stapelstation zugeführt werden. Je nach Stellung der Ausgangsweichenanordnung werden somit wahlweise erste Waffelblätter mit einer ersten Cremelage, zweite Waffelblätter mit einer zweiten Cremelage oder dritte Waffelblätter der Stapelstation nacheinander zugeführt. Dadurch kann ein beliebiger Aufbau des Waffelblocks gebildet werden.

Um den Produktionsprozess so effizient wie möglich zu gestalten, ist es von Vorteil, wenn der Durchsatz der Anlage maximiert ist. Üblicherweise ist der Durchsatz der Anlage durch den Durchsatz der Waffelbackmaschine begrenzt. Moderne Waffelbackmaschinen haben beispielsweise eine Produktionskapazität von etwa 80 bzw. 60 bis 100 Waffelblättern pro Minute. Die Waffelblätter haben üblicherweise eine Größe von etwa 40 x 80 cm. Somit werden bevorzugt von der Waffelbackmaschine etwa 60 bis 100 Waffelblätter pro Minute an die Eingangsstation übergeben. Durch die Eingangsweichenanordnung werden diese Waffelblätter auf die einzelnen Förderflächen aufgeteilt. Durch die Ausgangsweichenanordnung werden die Waffelblätter, gegebenenfalls bestrichen, wieder zusammengeführt, um an die Stapelstation übergeben zu werden. In der Stapelstation ist zur Optimierung des Herstellungsprozesses wieder ein Durchsatz benötigt, der dem Durchsatz der Waffelbackmaschine entspricht. Dieser Durchsatz, dividiert durch die Anzahl der Waffelschichten pro Waffelblock ergibt die Kapazität der produzierbaren Waffelblöcke der Anlagen.

Erfindungsgemäß kann vorgesehen sein, dass die Waffelblöcke eine wählbare Anzahl und Abfolge an unterschiedlichen Cremeschichten aufweisen. Je nach Verhältnis der unterschiedlichen Waffelblockbestandteile wird die durchschnittliche Geschwindigkeit pro Förderfläche angepasst. Müssen beispielsweise doppelt so viele erste Waffelblätter wie zweite Waffelblätter pro Waffelblock gestapelt werden, so wird die durchschnittliche Geschwindigkeit der ersten Förderfläche etwa doppelt so hoch sein wie die Geschwindigkeit der zweiten Förderfläche.

Die Förderflächen weisen Fördervorrichtungen auf, die bevorzugt unabhängig voneinander steuerbar oder regelbar sind, sodass die Transportgeschwindigkeiten entlang der Fördervorrichtungen flexibel einstellbar bzw. wählbar sind.

Ferner umfassen auch die einzelnen Förderflächen einzelne Fördervorrichtungen, die unterschiedliche Geschwindigkeiten aufweisen können und/oder die unabhängig voneinander steuer- oder regelbar sind. Wie eingangs erwähnt, ist es zur Verbesserung der Effizienz vorteilhaft, wenn im Bereich der Streichstation die Waffelblätter Stoß an Stoß aneinander liegend bestrichen werden. Dazu ist eine Streichfördervorrichtung vorgesehen. Auf dieser Streichfördervorrichtung werden die Waffelblätter durch die Streichstation oder im Bereich der Streichstation befördert.

In Förderrichtung vor der Streichstation ist eine Zustellfördervorrichtung vorgesehen. Bevorzugt weist diese Zustellfördervorrichtung eine andere Geschwindigkeit auf als die Streichfördervorrichtung. Besonders bevorzugt weist die Zustellfördervorrichtung eine höhere Geschwindigkeit auf als die Streichfördervorrichtung. Die von der Eingabestation an die Zustellfördervorrichtung übergebenen Waffelblätter werden beabstandet zueinander transportiert. Dies bedeutet, dass zwischen zwei aufeinanderfolgenden Waffelblättern ein Abstand vorgesehen ist. Um diesen Abstand nun zu verringern, um eine durchgehende bestreichbare Fläche zu bilden, weist die Streichfördervorrichtung eine geringere Transportgeschwindigkeit auf als die Zustellfördervorrichtung. Dadurch werden die Waffelblätter zusammengeschoben und bevorzugt Stoß an Stoß durch die Streichstation gefördert.

Bevorzugt ist die Geschwindigkeitsdifferenz zwischen der Transportgeschwindigkeit der Zustellfördervorrichtung minus der Transportgeschwindigkeit der Streichfördervorrichtung im Wesentlichen gleich dem Wert des Maßes des Abstandes zwischen zwei nacheinander auf der Zustellfördervorrichtung beförderten Waffelblättern. Bewegen sich beispielsweise zwei Waffelblätter mit einer Geschwindigkeit von einem m/s auf der Zustellfördervorrichtung, wobei die zwei Waffelblätter darüber hinaus einen Abstand von ½ m zueinander aufweisen, so kann die Streichfördervorrichtung eine Transportgeschwindigkeit von ½ m/s aufweisen, sodass die beiden Waffelblätter Stoß an Stoß durch die Streichstation befördert werden. Bei der oben genannten Rechnung ist zu beachten, dass die Einheit des Maßes des Abstandes und die Einheit des Weges pro Zeiteinheit bei der Transportgeschwindigkeit die selbe Einheit haben müssen.

Ferner weist bevorzugt die Abführfördervorrichtung eine höhere Transportgeschwindigkeit auf als die Streichfördervorrichtung. Dadurch werden die einzelnen Stoß an Stoß liegenden Waffelblätter nach der Streichstation auf der Abführfördervorrichtung wieder voneinander getrennt. Je nach Geschwindigkeit weisen die einzelnen bestrichenen Waffelblätter nach der Streichstation wieder einen gewissen Abstand zueinander auf. Insbesondere sollen die einzelnen Waffelblätter in der Stapelstation einen gewissen Abstand zueinander aufweisen, sodass ein einfaches und sauberes Stapeln der Waffelblockbestandteile ermöglicht ist. Es wäre dazu auch grundsätzlich möglich, die Erhöhung der Geschwindigkeit zum Zwecke der Beabstandung der Waffelblätter auf der Stapelfördervorrichtung vorzunehmen.

Ferner müssen die Geschwindigkeiten und Taktraten der einzelnen Fördervorrichtungen auch derart angepasst sein, dass Waffelblätter unterschiedlicher Förderflächen zu einem Waffelblock zusammengefügt werden können.

Dazu sind bevorzugt Stauzonen vorgesehen, in denen die Waffelblätter verlangsamt transportiert werden und Beschleunigungszonen, in denen Waffelblätter schneller transportiert werden. Dadurch sind Pufferzonen gebildet, die die flexible Wahl der Anordnung, der Anzahl und der Abfolge von Waffelblockbestandteilen ermöglichen.

Diese Stauzonen, Pufferzonen und Beschleunigungszonen können durch die einzelnen Fördervorrichtungen gebildet sein. Insbesondere können entlang der unterschiedlichen Förderflächen mehrere Fördervorrichtungen vorgesehen sein, deren Geschwindigkeiten flexibel steuer- und/oder regelbar sind.

Ein beispielhaftes Verfahren zur Herstellung eines Waffelblocks könnte beispielsweise folgende Schritte umfassen:
In einem ersten Schritt können beispielsweise die Anzahl und die Abfolge der einzelnen Waffelblockbestandteile gewählt werden. Je nach Wahl, insbesondere je nach Verhältnis von ersten Waffelblättern mit einer ersten Cremelage zu zweiten Waffelblättern mit einer zweiten Cremelage werden die einzelnen Waffelblätter auf die einzelnen Förderflächen aufgeteilt. Die Aufteilung der Waffelblätter auf die einzelnen Förderflächen geschieht bevorzugt in einem Verhältnis, das dem Verhältnis der unterschiedlichen Waffelblockbestandteile im fertigen Waffelblock entspricht. Auch die Fördergeschwindigkeiten der einzelnen Förderflächen und Fördervorrichtungen werden angepasst, sodass die einzelnen Waffelblockbestandteile im gewünschten Verhältnis, insbesondere in der gewünschten Abfolge und der gewünschten Anzahl an die Stapelstation übergeben werden können. Ferner weisen die Waffelblockbestandteile auch im Verlauf der einzelnen Förderflächen unterschiedliche Geschwindigkeiten an unterschiedlichen Stellen auf. Beispielsweise werden die Waffelblätter anfänglich langsam bewegt, um ein Pufferreservoir an Waffelblättern zur Verfügung zu haben. Gegebenenfalls werden die Waffelblätter im Bereich der Streichstationen langsam befördert, sodass diese bevorzugt Stoß an Stoß aneinander liegen. In weiterer Folge können die Waffelblätter im Verlauf der Förderflächen nach der Streichstation beschleunigt werden, sodass die Waffelblätter wieder einen Abstand zueinander aufweisen. Dieser Abstand ist beispielsweise notwendig, um eine abwechselnde Übergabe durch die Ausgangsweichenanordnung von unterschiedlichen Förderflächen zu ermöglichen. Auch in der Stapelstation sollten bevorzugt die einzelnen Waffelblockbestandteile einen Abstand zueinander aufweisen, um eine Verbesserung der Stapelbarkeit zu bewirken.

Die Steuerung der Transportgeschwindigkeiten der einzelnen Fördervorrichtungen erfolgt bevorzugt durch eine Steuerungseinheit. Insbesondere erfolgt die Anpassung der einzelnen Transportgeschwindigkeiten abhängig von der Wahl der Anzahl und der Abfolge von Waffelblockbestandteilen eines Waffelblocks.

Die erfindungsgemäße Anlage umfasst bevorzugt Weichenanordnungen. Diese Weichenanordnungen sind dazu geeignet und/oder eingerichtet, ein Waffelblatt kommend von einer Förderfläche wahlweise auf unterschiedliche weitere Förderflächen zu übergeben. In einer einfachen Ausführung ist die Eingangsweichenordnung beispielsweise mit einem schwenkbaren Element wie beispielsweise einem schwenkbaren Förderer oder einer schwenkbaren Förderfläche ausgestattet. Eine weitere Möglichkeit einer Weichenanordnung ist, dass eine erste Förderfläche vorgesehen ist, von der aus eine zweite Förderfläche abzweigt. Die beiden Förderflächen sind somit, entgegen der Förderrichtung betrachtet, zueinander geführt. Unterhalb der ersten Förderfläche oder im Bereich der ersten Förderfläche ist eine Überdruckquelle zur Ausgabe eines gezielten Luftstroms vorgesehen. Durch Aktivierung des Luftstroms kann ein Waffelblatt von der ersten Förderfläche abgehoben werden, um auf die zweite Förderfläche weitergeleitet zu werden. Diese Weichenanordnung kann insbesondere als Eingangsweichenanordnung vorgesehen sein. Gegebenenfalls ist oberhalb der zweiten Förderfläche eine weitere Förderfläche vorgesehen die verhindert, dass das durch den Luftstrom nach oben bewegte Waffelblatt zu weit von den Förderflächen abhebt. Insbesondere überragt diese weitere Förderfläche die zweite Förderfläche entgegen der Förderrichtung und wirkt bevorzugt als Leitfläche oder Anschlag.

Eine derartige Konstruktion kann auch zur Übergabe eines Waffelblatts von der zweiten Förderfläche auf die dritte Förderfläche vorgesehen sein.

Als Ausgangsweichenanordnung können beispielsweise in Förderrichtung zusammenführende Flächen wie zusammenführende Platten oder zusammenführende Förderer vorgesehen sein.

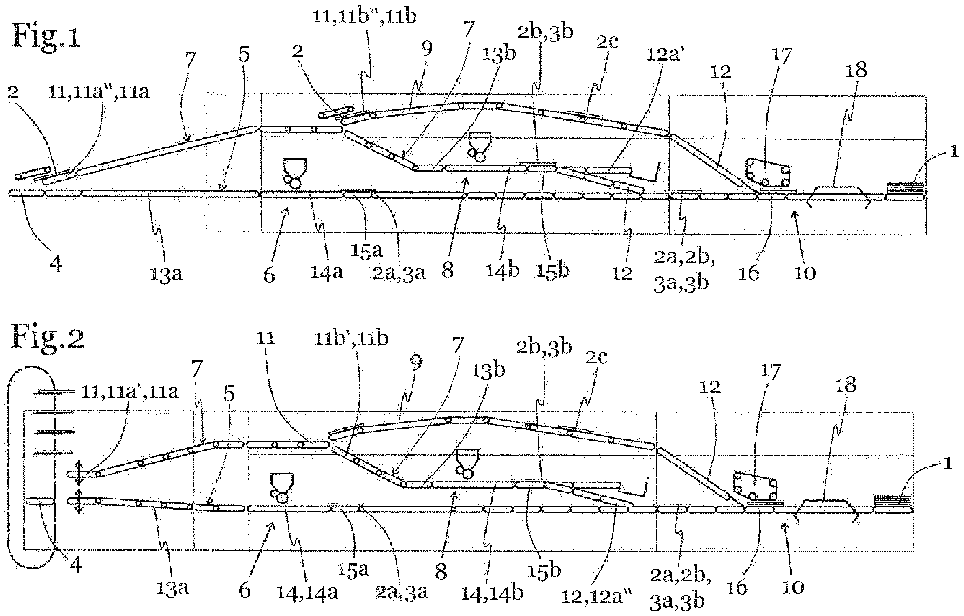

Gegebenenfalls umfasst eine Weichenanordnung, insbesondere eine Eingangsweichenordnung, einen Elevator. Dieser Elevator, beispielsweise dargestellt in Fig.2, entspricht einem Endlosförderer, der eine vertikale Haupterstreckungsrichtung aufweist und an dem eine Vielzahl an Waffelblättern in vertikaler Richtung auf- und abgefördert werden können. Dieser Elevator dient insbesondere auch der Kühlung der heißen Waffelblätter, wie sie aus der Backmaschine ausgegeben werden. Im Bereich der ersten Förderfläche bzw. im Bereich der zweiten Förderfläche werden die Waffelblätter im Elevator nach unten gefördert und bevorzugt von oben auf eine der Förderflächen abgelegt. Dort werden sie von den Fördervorrichtungen abgenommen und entlang der Fördervorrichtung weiter gefördert. Gegebenenfalls sind die Abschnitte der ersten Förderfläche oder der zweiten Förderfläche, die die Waffelblätter von dem Elevator abnehmen, bewegbar oder schwenkbar ausgeführt. Dadurch kann der Zeitpunkt und die Lage der Abnahme der Waffelblätter geregelt und/oder gesteuert werden.

Zur Stapelung der Waffelblockbestandteile, insbesondere der ersten, der zweiten und der dritten Waffelblätter ist bevorzugt eine Stapelstation vorgesehen. Diese Stapelstation kann beispielsweise als Kombination einer Sandwiching-Vorrichtung mit einer Pressvorrichtung ausgebildet sein. Bei dieser Ausführung wird zuerst in der Sandwiching-Vorrichtung ein Waffelsandwich gebildet. Dieses wird von der Stapelvorrichtung und insbesondere von einer Saugplatte der Stapelvorrichtung von der Stapelfördervorrichtung abgehoben und in weiterer Folge auf nachfolgende mit einer Cremelage versehene weitere Waffelblätter aufgesetzt. Ist der fertige Waffelblock gebildet, so wird dieser von der Stapelvorrichtung auf die Stapelfördervorrichtung abgesetzt und weitertransportiert.

Gegebenenfalls ist die Stapelstation 10 als Spiralstapelvorrichtung ausgebildet. Bei dieser wird zuerst ein unbestrichenes Waffelblatt, insbesondere ein drittes Waffelblatt, durch spiralförmige Fördervorrichtungen vertikal von der Stapelfördervorrichtung abgehoben. In weiterer Folge werden weitere mit einer Cremelage versehene Waffelblätter von unten an das erste unbestrichene Waffelblatt angelegt. Ist der fertige Waffelblock gebildet, so wird dieser abtransportiert und bevorzugt durch eine Kalibriervorrichtung, insbesondere eine Kalibrierwalze, zusammengepresst und kalibriert.

Gemäß einer weiteren Ausführungsform kann die Stapelstation als Fallschacht ausgebildet sein. Bei diesem werden zuerst die mit einer Cremelage versehenen Waffelblätter in die Stapelstation gefördert. Dort werden sie übereinander in einem Fallschacht gestapelt, sodass sich die gewünschte Abfolge der mit Creme bestrichenen Waffelblätter ergibt. Als letztes wird ein unbestrichenes Waffelblatt, insbesondere ein drittes Waffelblatt, auf die bestehenden Waffelblätter gelegt, um den fertigen Waffelblock zu bilden. In weiterer Folge wird der fertige Waffelblock bevorzugt kalibriert. Diese Kalibrierung geschieht wiederum beispielsweise über eine Kalibrierwalze oder eine Pressplatte.

Die Erfindung wird nun anhand konkreter Ausführungsformen weiter erörtert.
Fig. 1 zeigt eine schematische Seitenansicht einer erfindungsgemäßen Anlage in einer ersten Ausführung.
Fig. 2 zeigt eine schematische Seitenansicht einer erfindungsgemäßen Anlage in einer zweiten Ausführung.

In den Figuren 1 und 2 ist jeweils eine erfindungsgemäße Anlage zur Herstellung von Waffelblöcken dargestellt. Diese Anlagen umfassen eine Eingangsstation 4, an der die von einer Waffelbackmaschine kommenden Waffelblätter an die erfindungsgemäße Anlage übergeben werden. In Transportrichtung nach der Eingangsstation 4 oder in der Eingangsstation 4 ist eine Eingangsweichenanordnung 11 angeordnet. In der vorliegenden Ausführungsform umfasst die Eingangsweichenanordnung 11 mehrere Weichen, insbesondere eine erste Eingangsweiche 11a und eine zweite Eingangsweiche 11b. Die Eingangsweichenanordnung 11 weist gegebenenfalls eine erste Stellung 11a' auf. In dieser Stellung werden Waffelblätter, kommend von der Eingangsstation 4, entlang der ersten Förderfläche 5 weiter in Richtung erste Streichstation 6 transportiert. Ferner kann die Eingangsweichenanordnung 11 eine Stellung 11a" aufweisen. In dieser Stellung werden Waffelblätter 2, kommend von der Eingangsstation 4 an die zweite Förderfläche 7 übergeben. Ferner weist die Eingangsweichenanordnung eine weitere Stellung 11b' auf, in welcher Waffelblätter kommend von der Eingangsstation 4 und insbesondere kommend von der zweiten Förderfläche 7 entlang der zweiten Förderfläche 7 weiter Richtung zweite Streichstation 8 befördert werden. Die Eingangsweichenanordnung 11 weist auch eine weitere Stellung 11b" auf, in der Waffelblätter, kommend von der Eingangsstation und insbesondere von der zweiten Förderfläche 7, an die dritte Förderfläche 9 übergeben werden. In den vorliegenden Ausführungsformen der Fig. 1 und der Fig. 2 sind jeweils eine erste Eingangsweiche 11a und eine zweite Eingangsweiche 11b vorgesehen. Die Eingangsweiche 11a weist zwei Stellungen auf, die den Stellungen 11a' und 11a" der vorangegangenen Beschreibung entsprechen. Die zweite Eingangsweiche 11b weist ebenfalls zwei Stellungen 11b' und 11b" auf, die der vorangegangenen Beschreibung entsprechen.

Es entspricht jedoch ebenfalls dem Erfindungsgedanken, dass eine einzige Weiche, beispielsweise eine 3-Wege-Weiche die Aufteilung auf drei Förderflächen erlaubt. Ferner entspricht es dem Erfindungsgedanken, dass die Eingangsweichenanordnung die Waffelblätter beispielsweise über einen Luftstrom oder andere Mittel von einer Förderfläche auf einen weitere Förderfläche umlenkt.

Beispielsweise können die Eingangsweichen 11a und 11b als schwenkbare Fördervorrichtungen ausgeführt sein. Beispielsweise kann ein schwenkbarer Endlosförderer vorgesehen sein. Die Schwenkachse der Nase entspricht dabei im Wesentlichen einer horizontalen Achse, die normal zur Förderrichtung und zur Förderfläche der Waffeln verläuft. Die Nase ist bevorzugt gegen die Förderrichtung der Waffelblätter gerichtet und verlagerbar.

Ein Waffelblatt 2, das entlang der ersten Förderfläche 5 transportiert wird, passiert in einem ersten Bereich eine erste Zustellfördervorrichtung 13a. Diese Zustellfördervorrichtung umfasst eine oder mehrere Fördervorrichtungen. Durch die Zustellfördervorrichtung ist ein erstes Waffelblatt zur ersten Streichstation 6 geleitet. Die erste Streichstation 6 umfasst einen Streichkopf, über den die Creme auf ein Waffelblatt aufgetragen werden kann. Ferner umfasst die erste Streichstation 6 eine Streichfördervorrichtung 14 und insbesondere eine erste Streichfördervorrichtung 14a. Gegebenenfalls sind mehrere Fördervorrichtungen im Bereich der Streichstation vorgesehen.

Nach der ersten Streichfördervorrichtung 14a werden die Waffelblätter 2 über eine Abführfördervorrichtung 15 weiter befördert. Diese Abführfördervorrichtung kann ebenfalls mehrere Fördervorrichtungen umfassen. Von der Abführfördervorrichtung 15 werden die Waffelblätter weiter zur Stapelstation 10 befördert. Die Stapelstation 10 umfasst beispielsweise eine Sandwiching-Vorrichtung 17 sowie eine Stapelvorrichtung 18. Im Bereich der Stapelstation 10 ist/sind beispielsweise eine oder mehrere Stapelfördervorrichtung(en) 16 vorgesehen.

Wird ein Waffelblatt 2 entlang der zweiten Förderfläche 7 bewegt, so passiert es in einem ersten Schritt die zweite Zustellfördervorrichtung 13b. Diese kann, wie alle Fördervorrichtungen als eine einzige Fördervorrichtung oder als eine Anordnung mehrerer Fördervorrichtungen ausgebildet sein. Die Zustellfördervorrichtung 13 transportiert das Waffelblatt 2 entlang der zweiten Förderfläche 7 zur zweiten Streichstation 8. Die zweite Streichstation 8 umfasst wiederum einen Streichkopf. Ferner umfasst die zweite Streichstation 8 eine zweite Streichfördervorrichtung 14b. Nach Passieren der zweiten Streichstation 8 werden die bestrichenen Waffelblätter weiter über eine zweite Abführfördervorrichtung 15b transportiert. Diese Abführfördervorrichtung 15b transportiert die Waffelblätter weiter Richtung Stapelstation 10.

Wird ein Waffelblatt entlang der dritten Förderfläche 9 befördert, so wird das dritte Waffelblatt gemäß der vorliegenden Ausführungsform nicht bestrichen, sondern kommt unbestrichen zur Stapelstation 10. In der Stapelstation 10 wird das dritte Waffelblatt beispielsweise auf ein erstes Waffelblatt mit einer ersten Cremelage oder auf ein zweites Waffelblatt mit einer zweiten Cremelage aufgelegt, um ein Waffelsandwich zu bilden.

Dieses Waffelsandwich kann dann beispielsweise von der Stapelvorrichtung 18 von der Förderfläche und insbesondere von der Stapelfördervorrichtung 16 abgehoben werden, um einen weiteren Waffelblockbestandteil, insbesondere ein erstes Waffelblatt mit einer ersten Cremelage oder ein zweites Waffelblatt mit einer zweiten Cremelage in die Stapelvorrichtung 18 fördern zu können. In einem weiteren Schritt wird das abgehobene Waffelsandwich auf die Cremelage des weiteren Waffelblatts aufgelegt und aufgepresst. Dadurch geschieht eine Stapelung. In einem weiteren Schritt kann der Verbund aus drei Waffelblättern und zwei Cremeschichten ein weiteres Mal abgehoben werden, um in weiterer Folge auf ein weiteres Waffelblatt mit einer weiteren Cremelage aufgedrückt zu werden. Durch das Niederpressen der von der Stapelvorrichtung gestapelten Waffelblockbestandteile kommt es zu einer Kalibrierung des Waffelblocks. Dadurch kann der Waffelblock auf eine konstante und/oder wählbare Höhe kalibriert werden. Bevorzugt ist die Stapelfördervorrichtung nicht als herkömmlicher, im Wesentlichen elastischer bis biegeschlaffer Bandförderer angeordnet. Zur Unterstützung gegen die Kalibrierkraft und gegen den Druck der Stapelvorrichtung kann beispielsweise ein Saugbandförderer mit einem unterstützen Förderband vorgesehen sein. Ferner kann ein Gegenhalter vorgesehen sein, der unmittelbar unterhalb des Bandes der Stapelfördervorrichtung 16 geführt ist.

Bevorzugt ist die Anlage derart ausgestaltet, dass die erste Förderfläche und die zweite Förderfläche vor der Stapelstation über die Ausgangsweichenanordnung und insbesondere über die erste Ausgangsweiche verbunden oder verbindbar sind. Dadurch können die ersten Waffelblätter und die zweiten Waffelblätter der Stapelstation in gewünschter Anzahl und Abfolge, insbesondere über die Stapelfördervorrichtung, nacheinander zugeführt werden.

Gegebenenfalls ist die Anlage derart ausgestaltet, dass die dritte Förderfläche über die Ausgangsweichenanordnung in der Stapelstation mit der Stapelfördervorrichtung verbunden oder verbindbar ist. Dadurch können die dritten Waffelblätter direkt in der Stapelstation und insbesondere in der Sandwiching-Vorrichtung mit einem ersten Waffelblatt oder mit einem zweiten Waffelblatt zu einem Waffelsandwich verbunden werden. In diesem Fall erstreckt sich die Ausgangsweichenanordnung auf einen Teil der Stapelstation.

Erfindungsgemäß ist die Anlage dazu geeignet und/oder eingerichtet, Waffelblöcke mit einer beliebigen Anzahl und Abfolge an unterschiedlichen Waffelblockbestandteilen zu bilden. Exemplarisch wird die Herstellung eines Waffelblocks beschrieben, der von oben nach unten folgenden Schichtaufbau aufweist:
- Ein Waffelblatt (Waffeldeckblatt)
- Eine Cremelage aus einer ersten Creme (Dunkelschokoladecreme)
- Ein Waffelblatt
- Eine Cremelage aus einer zweiten Creme (Hellschokoladecreme)
- Ein Waffelblatt
- Eine Cremelage aus einer ersten Creme (Dunkelschokoladecreme)
- Ein Waffelblatt (Waffelgrundblatt)

Zur Herstellung dieses Waffelblockaufbaus kann das erfindungsgemäße Verfahren bzw. die erfindungsgemäße Anlage beispielsweise wie folgt ausgeführt sein:
Grundsätzlich werden zur Bildung dieses Waffelblocks vier Waffelblätter benötigt. Diese Waffelblätter werden nacheinander von der Waffelbackmaschine an die Eingangsstation 4 übergeben, wobei die Abfolge der Übergabe nicht zwingend der Abfolge der Schichten des fertigen Waffelblocks entsprechen muss. Ein Waffelblatt wird über die Eingangsweichenanordnung und insbesondere über die erste Eingangsweiche und die zweite Eingangsweiche an die dritte Förderfläche 9 übergeben.

Das nächste aus der Eingangsstation 4 kommende Waffelblatt wird beispielsweise über die Eingangsweichenanordnung an die erste Förderfläche 5 übergeben. Im Verlauf der ersten Förderfläche passiert das erste Waffelblatt 2a eine Zustellfördervorrichtung 13a und die erste Streichstation 6. In der ersten Streichstation 6 wird das erste Waffelblatt 2a mit einer ersten Cremelage 3a aus einer ersten Creme versehen. Die erste Creme ist in dem vorliegenden Fall die Dunkelschokoladecreme.

Das nächste von der Eingangsstation 4 kommende Waffelblatt 2 wird als zweites Waffelblatt 2b an die zweite Förderfläche 7 übergeben. Dort wird das zweite Waffelblatt 2b mit einer zweiten Cremelage 3b versehen. Die zweite Cremelage 3b besteht aus einer zweiten Creme, die im vorliegenden Fall eine helle Schokoladecreme ist.

Das nächste von der Eingangsstation 4 kommende Blatt wird beispielsweise wiederum der ersten Förderfläche 5 zugeführt, um es mit einer ersten Cremelage 3a aus einer ersten Creme umfassend Dunkelschokolade zu bestreichen.

Die Streichvorgänge der unterschiedlichen Förderflächen können gleichzeitig oder nacheinander geschehen.

Über die Abführfördervorrichtungen werden die Waffelblätter mit ihren Cremelagen weiter gefördert. Zuerst wird ein erstes Waffelblatt 2a mit der ersten Cremelage 3a über die erste Abführfördervorrichtung 15a zur Stapelstation 10 gefördert. Gleichzeitig wird das dritte Waffelblatt 2c über die dritte Förderfläche 9 transportiert und derart synchronisiert, dass das dritte Waffelblatt 2c und das erste Waffelblatt 2a in der Sandwiching-Vorrichtung 17 der Stapelstation 10 im Wesentlichen deckungsgleich übereinander positioniert und zusammengefügt werden. Die Stapelfördervorrichtung 16 fördert dieses Waffelsandwich weiter zur Stapelvorrichtung 18. Die Stapelvorrichtung 18 hebt das eben gebildete Waffelsandwich von der Stapelfördervorrichtung 16 ab. Anschließend oder gleichzeitig wird von der zweiten Förderfläche 7 das zweite Waffelblatt 2b mit einer zweiten Cremelage 3b aus einer zweiten Creme umfassend helle Schokolade der Stapelstation 10 zugeführt. Befindet sich dieser Waffelblockbestandteil in der Stapelvorrichtung 18, so wird das Waffelsandwich auf das zweite Waffelblatt 2b mit seiner zweiten Cremelage 3b aufgesetzt und aufgepresst. Gleichzeitig oder danach wird der Verbund aus dem Waffelsandwich und dem zweiten Waffelblatt mit der zweiten Cremelage wiederum von der Stapelfördervorrichtung abgehoben. Ein weiteres erstes Waffelblatt 2a mit einer weiteren ersten Cremelage 3a wird in die Stapelstation 10 gefördert. Dort wird der abgehobene Verbund aus dem Waffelsandwich und dem zweiten Waffelblatt auf das weitere erste Waffelblatt und insbesondere auf die erste Cremelage 3a des weiteren ersten Waffelblatts aufgesetzt und aufgepresst, sodass der gewünschte Schichtaufbau gebildet ist. Der Waffelblock wird gegebenenfalls ein weiteres Mal kalibriert und auf ein Normmaß zusammengedrückt. In weiterer Folge wird der fertige Waffelblock über die Stapelfördervorrichtung 16 aus der Stapelstation 10 befördert.

Die Zuführung der Waffelblockbestandteile aus der ersten Förderfläche 5, der zweiten Förderfläche 7 und der dritten Förderfläche 9 geschieht über eine Ausgangsweichenanordnung 12. Diese Ausgangsweichenanordnung 12 kann mehrere Ausgangsweichen, insbesondere eine erste Ausgangsweiche 12a und eine zweite Ausgangsweiche 12b umfassen. Diese weisen gegebenenfalls mehrere Stellungen auf, über die die Waffelblätter, die gegebenenfalls mit einer Creme bestrichen sind, der Stapelstation 10 zugeführt werden können.

Die Ausgangsweichenanordnung kann beispielsweise schwenkbare Fördervorrichtungen, schwenkbare Platten, starre Fördervorrichtungen, starre Platten oder ähnliche Vorrichtungen umfassen. Gegebenenfalls ist wie auch bei der Eingangsweichenanordnung eine Dreiwegeweiche vorgesehen.

Bevorzugt weist ein schwenkbares Element der Ausgangsweichenanordnung eine Nase auf. Diese Nase ist bevorzugt in Förderrichtung der Waffelblätter gerichtet. Gegebenenfalls ist die Ausgangsweichenanordnung oder die Ausgangsweiche jedoch auch starr ausgebildet. Dabei können die Förderflächen zueinander schräggestellt verlaufen, sodass eine Übergabe der Waffelblätter ermöglicht ist. Auch Leitvorrichtungen wie Leitbleche können eingesetzt werden, um die Waffelblätter der drei Förderflächen zur Stapelstation und insbesondere auf die Stapelfördervorrichtung zu transportieren.

Um die Waffelblockbestandteile in der Stapelstation 10 exakt übereinander stapeln zu können, ist eine exakte zeitliche Steuerung der Zuführung und der Position der einzelnen Waffelblockbestandteile von großer Bedeutung. Zur Steuerbarkeit oder Regelbarkeit der Positionierung der einzelnen Waffelblockbestandteile umfasst die erfindungsgemäße Anlage bevorzugt mehrere Fördervorrichtungen. Diese Fördervorrichtungen sind beispielsweise als Endlosfördervorrichtungen ausgebildet. Bevorzugt können die einzelnen Fördervorrichtungen oder zumindest einige der Fördervorrichtungen getrennt voneinander gesteuert oder geregelt werden, sodass die Geschwindigkeiten, insbesondere die Transportgeschwindigkeiten der auf den Fördervorrichtungen bewegten Waffelblätter, individuell gesteuert werden können. Auch Sensoren können vorgesehen sein, um beispielsweise die Positionen und/oder die Geschwindigkeiten der einzelnen Waffelblockbestandteile bestimmen zu können. Zur Bildung eines Waffelsandwichs kann beispielsweise entlang der Abführfördervorrichtung der dritten Förderfläche 9 ein Sensor vorgesehen sein. Dieser erfasst die Lage eines dritten Waffelblatts. Gegebenenfalls kann das dritte Waffelblatt angehalten oder verlangsamt werden, um erst dann Richtung Stapelstation geleitet zu werden, wenn das Waffelgrundblatt mit der Cremeschicht an die vorgesehene Position bewegt wird. Auch die Position des Waffelgrundblattes kann durch einen Sensor, wie beispielsweise eine Lichtschranke, bestimmt werden.

Zur Verbesserung der Effizienz der Streichstation werden die Waffelblätter, die nacheinander entlang der ersten Förderfläche 5 oder entlang der zweiten Förderfläche 7 in die Streichstation bewegt werden, Stoß an Stoß angeordnet, sodass eine durchgehende, im Wesentlichen unterbrechungsfreie, bestreichbare Fläche gebildet ist. Nach der Streichstation können die einzelnen Waffelblätter wieder voneinander getrennt werden. Diese Trennung geschieht beispielsweise durch eine Beschleunigung der bestrichenen Waffelblätter. Durch den Geschwindigkeitsunterschied werden die Waffelblätter beabstandet voneinander weiter gefördert. Diese Beabstandung ist insbesondere dann von Vorteil, wenn beispielsweise zwischen zwei erste Waffelblätter ein zweites Waffelblatt eingefügt werden soll, um eine abwechselnde Stapelung in der Stapelstation zu bewirken. Ferner ist ein gewisser Abstand zwischen den Waffelblättern auch dann von Vorteil, wenn die Stapelstation dazu eingerichtet oder geeignet ist, Waffelblockbestandteile zu stapeln, die beabstandet voneinander zugeführt werden.

Ferner ist eine individuelle Steuerung einzelner Fördervorrichtungen dann von Vorteil, wenn der Anteil an ersten Waffelblättern im fertigen Waffelblock ein anderer ist als der Anteil der zweiten Waffelblätter. Beispielsweise ist bei der vorangegangenen beispielhaften Ausführung des Waffelblocks lediglich ein zweites Waffelblatt vorgesehen, während zwei erste Waffelblätter vorgesehen sind. Somit müssen zur Bildung mehrerer Waffelblöcke 1, aber auch zur Bildung eines einzelnen Waffelblocks 1, doppelt so viele erste Waffelblätter mit einer ersten Cremelage bestrichen werden als zweite Waffelblätter mit einer zweiten Cremelage. Aus diesem Grund ist der Durchsatz entlang der ersten Förderfläche in diesem Beispiel doppelt so hoch wie der Durchsatz an der zweiten Förderfläche. Folglich sollte auch die durchschnittliche Geschwindigkeit entlang der ersten Förderfläche etwa doppelt so hoch sein wie die Transportgeschwindigkeit der zweiten Förderfläche. Somit entspricht das Verhältnis des Durchsatzes der ersten Förderfläche zum Durchsatz der zweiten Förderfläche im Wesentlichen dem Verhältnis der Anzahl der ersten Waffelblätter zur Anzahl der zweiten Waffelblätter im fertigen Waffelblock.

Durch unterschiedliche Transportgeschwindigkeiten einzelner Fördervorrichtungen können auch Pufferzonen gebildet sein, in denen Waffelblätter bereit liegen, um sie je nach Bedarf weiter zu transportieren.

Gemäß einer bevorzugten Ausführungsform der Erfindung ist eine Steuerungseinheit vorgesehen. Diese Steuerungseinheit ist dazu eingerichtet und/oder geeignet, Parameter der Anlage zu steuern oder zu regeln sowie die Parameter in Abhängigkeit von eingegebenen, gewählten Parametern abzuändern. Beispielsweise kann über die Steuerungseinheit oder an die Steuerungseinheit der gewünschte Schichtaufbau des fertigen Waffelblocks eingegeben werden. Dabei kann sowohl die Abfolge als auch die Anzahl der einzelnen Waffelblockbestandteile im Wesentlichen frei gewählt werden. Je nach Eingabe werden die Transportgeschwindigkeiten und die Streichgeschwindigkeiten der Fördervorrichtungen angepasst, sodass in der Stapelstation der gewünschte Aufbau des Waffelblocks gebildet werden kann. Gemäß bevorzugten Ausführungsformen ist die Anlage dazu geeignet, Waffelblöcke mit drei, vier, fünf, sechs, sieben, acht, neun und/oder zehn übereinander gestapelten Waffelblättern zu bilden.

### Bezugszeichenliste

- 1: Waffelblock
- 2: Waffelblatt
- 2a: erstes Waffelblatt
- 2b: zweites Waffelblatt
- 2c: drittes Waffelblatt
- 3: Cremelage
- 3a: erste Cremelage
- 3b: zweite Cremelage
- 4: Eingangsstation
- 5: Erste Förderfläche
- 6: Erste Streichstation
- 7: Zweite Förderfläche
- 8: Zweite Streichstation
- 9: Dritte Förderfläche
- 10: Stapelstation
- 11: Eingangsweichenanordnung
- 11a': erste Stellung
- 11a": zweite Stellung
- 11b': erste Stellung
- 11b": zweite Stellung
- 12: Ausgangsweichenanordnung
- 12a': erste Stellung
- 12a": zweite Stellung
- 12b': erste Stellung
- 12b": zweite Stellung
- 13: Zustellfördervorrichtung
- 13a: erste Zustellfördervorrichtung
- 13b: zweite Zustellfördervorrichtung
- 14: Streichfördervorrichtung
- 14a: erste Streichfördervorrichtung
- 14b: zweite Streichfördervorrichtung
- 15: Abführfördervorrichtung
- 15a: erste Abführfördervorrichtung
- 15b: zweite Abführfördervorrichtung
- 16: Stapelfördervorrichtung
- 17: Sandwiching-Vorrichtung
- 18: Stapelvorrichtung

## Patentansprüche

1. Anlage zur Bildung von Waffelblöcken (1), wobei die Waffelblöcke (1) zumindest drei Waffelblätter (2) und zumindest zwei Cremelagen (3) aus zwei verschiedenen Cremen umfassen, wobei die Waffelblätter (2) und die Cremelagen (3) abwechselnd und parallel aufeinander liegend angeordnet sind, umfassend:
- eine Eingangsstation (4), an der einzelne Waffelblätter (2), bevorzugt kommend von einer Waffelbackmaschine, nacheinander an die Anlage übergeben werden,
- eine erste Förderfläche (5) zum Transport von ersten Waffelblättern (2a), wobei im Verlauf der ersten Förderfläche (5) eine erste Streichstation (6) zum Auftragen einer ersten Cremelage (3a) aus einer ersten Creme auf die ersten Waffelblätter (2a) vorgesehen ist,
- eine zweite Förderfläche (7) zum Transport von zweiten Waffelblättern (2b), wobei im Verlauf der zweiten Förderfläche (7) eine zweite Streichstation (8) zum Auftragen einer zweiten Cremelage (3b) aus einer zweiten Creme auf die zweiten Waffelblätter (2b) vorgesehen ist,
- eine dritte Förderfläche (9) zum Transport von dritten Waffelblättern (2c),
- eine Stapelstation (10), an der die ersten Waffelblätter (2a) mit ihren ersten Cremelagen (3a), die zweiten Waffelblätter (2b) mit ihren zweiten Cremelagen (3b) und die dritten Waffelblätter (2c) zu einem oder mehreren Waffelblöcken (1) gestapelt werden,
- eine Eingangsweichenanordnung (11), über die die Waffelblätter (2) der Eingangsstation (4) wahlweise an die erste Förderfläche (5), an die zweite Förderfläche (7) oder an die dritte Förderfläche (9) übergeben werden,
**dadurch gekennzeichnet, dass** die Anlage eine Ausgangsweichenanordnung (12) umfasst, über die die Waffelblätter (2) der ersten Förderfläche (5), der zweiten Förderfläche (7) oder der dritten Förderfläche (9) wahlweise an die Stapelstation (10) übergeben werden.

2. Anlage nach Anspruch 1, **dadurch gekennzeichnet, dass** die erste Förderfläche (5), die zweite Förderfläche (7) und die dritte Förderfläche (9) beabstandet voneinander nebeneinander und/oder übereinander angeordnet sind,
und dass die erste Förderfläche (5), die zweite Förderfläche (7) und die dritte Förderfläche (9) durch die Eingangsweichenanordnung (11) und die Ausgangsweichenanordnung (12) miteinander verbindbar sind, sodass ein Waffelblatt (2), kommend von der Eingangsstation (4) wahlweise über die erste Förderfläche (5), die zweite Förderfläche (7) oder die dritte Förderfläche (9) zur Stapelstation (10) transportierbar ist.

3. Anlage nach einem der Ansprüche 1 oder 2, **dadurch gekennzeichnet,**
**dass** im Verlauf der ersten Förderfläche (5) entlang der ersten Förderrichtung vor der ersten Streichstation (8) eine erste Zustellfördervorrichtung (13a) zum Transport der ersten Waffelblätter (2a) zur ersten Streichstation (6) angeordnet ist, dass im Verlauf der ersten Förderfläche (5) entlang der ersten Förderrichtung im Bereich der ersten Streichstation (6) eine erste Streichfördervorrichtung (14a) zum Transport der ersten Waffelblätter (2a) in der ersten Streichstation (6) angeordnet ist, dass im Verlauf der ersten Förderfläche (5) entlang der ersten Förderrichtung nach der ersten Streichstation (6) eine erste Abführfördervorrichtung (15a) zum Transport der ersten Waffelblätter (2a) und der darauf aufgebrachten ersten Cremelage (3a) von der ersten Streichstation (6) zur Stapelstation (10) angeordnet ist und dass die Anlage derart ausgeführt ist, dass die Transportgeschwindigkeit der ersten Streichfördervorrichtung (14a) kleiner ist als die Transportgeschwindigkeit der ersten Zustellfördervorrichtung (13a) und/oder kleiner ist als die Transportgeschwindigkeit der ersten Abführfördervorrichtung (15a), sodass die nacheinander auf der ersten Förderfläche (5) transportierten ersten Waffelblätter (2a) im Bereich der ersten Streichstation (6) einen geringeren Abstand zueinander aufweisen als im Verlauf der ersten Förderfläche (5) vor und/oder nach der ersten Streichstation (6) und insbesondere eine durchgehende bestreichbare Fläche bilden und Stoß an Stoß durch die Streichstation gefördert werden.

4. Anlage nach einem der Ansprüche 1 bis 3, **dadurch gekennzeichnet,**
- **dass** im Verlauf der zweiten Förderfläche (7) entlang der zweiten Förderrichtung vor der zweiten Streichstation (8) eine zweite Zustellfördervorrichtung (13b) zum Transport der zweiten Waffelblätter (2b) zur zweiten Streichstation (8) angeordnet ist,
- **dass** im Verlauf der zweiten Förderfläche (7) entlang der zweiten Förderrichtung im Bereich der zweiten Streichstation (8) eine zweite Streichfördervorrichtung (14b) zum Transport der zweiten Waffelblätter (2b) in der zweiten Streichstation (8) angeordnet ist,
- **dass** im Verlauf der zweiten Förderfläche (7) entlang der zweiten Förderrichtung nach der zweiten Streichstation (8) eine zweite Abführfördervorrichtung (15b) zum Transport der zweiten Waffelblätter (2b) und der darauf aufgebrachten zweiten Cremelage (3b) von der zweiten Streichstation (8) zur Stapelstation (10) angeordnet ist
- und **dass** die Anlage derart ausgeführt ist, dass die Transportgeschwindigkeit der zweiten Streichfördervorrichtung (14b) kleiner ist als die Transportgeschwindigkeit der zweiten Zustellfördervorrichtung (13b) und/oder kleiner ist als die Transportgeschwindigkeit der zweiten Abführfördervorrichtung (15b),
sodass die nacheinander auf der zweiten Förderfläche (7) transportierten zweiten Waffelblätter (2b) im Bereich der zweiten Streichstation (8) einen geringeren Abstand zueinander aufweisen als im Verlauf der zweiten Förderfläche (7) vor und/oder nach der zweiten Streichstation (8) und insbesondere eine durchgehende bestreichbare Fläche bilden und Stoß an Stoß durch die Streichstation gefördert werden.

5. Anlage nach einem der Ansprüche 3 oder 4, **dadurch gekennzeichnet, dass** die Anlage derart ausgeführt ist, dass der Abstand zwischen zwei nacheinander auf der Abführfördervorrichtung (15) beförderter Waffelblätter (2) größer ist als das Abmaß eines Waffelblattes (2) in Förderrichtung,
sodass über die Ausgangsweichenanordnung (12) ein zweites Waffelblatt (2b) der zweiten Förderfläche (7) zwischen zwei erste Waffelblätter (2a) der ersten Förderfläche (5) positioniert werden kann
oder sodass über die Ausgangsweichenanordnung (12) ein erstes Waffelblatt (2a) der ersten Förderfläche (5) zwischen zwei zweite Waffelblätter (2b) der zweiten Förderfläche (7) positioniert werden kann.

6. Anlage nach einem der Ansprüche 1 bis 5, **dadurch gekennzeichnet, dass** der Transport der Waffelblätter (2) in der Eingangsstation (4), der Stapelstation (10) und den Streichstationen (6,8) kontinuierlich erfolgt
und dass die bestrichenen Waffelblätter (2) entlang der jeweiligen Förderfläche (5, 7, 9) linear aneinandergereiht transportiert werden.

7. Anlage nach einem der Ansprüche 1 bis 6, **dadurch gekennzeichnet, dass** die Anlage derart ausgeführt ist, dass die Transportgeschwindigkeit der Stapelfördervorrichtung (16) größer ist als die Transportgeschwindigkeit der Streichfördervorrichtung (14), und insbesondere größer oder gleich ist als oder wie die Summe der durchschnittlichen Transportgeschwindigkeiten der ersten Förderfläche (5) plus der Transportgeschwindigkeiten der zweiten Förderfläche (7) plus der Transportgeschwindigkeiten der dritten Förderfläche (9), sodass die Waffelblätter (2) beabstandet zueinander in die Stapelstation (10) befördert werden.

8. Anlage nach einem der Ansprüche 1 bis 7, **dadurch gekennzeichnet, dass** die Zustellfördervorrichtung (13), die Streichfördervorrichtung (14), die Abführfördervorrichtung (15) und/oder die Stapelfördervorrichtung (16) einen oder mehrere Bandförderer, einen oder mehrere Riemenförderer oder einen oder mehrere Saugbandförderer umfasst oder umfassen.

9. Anlage nach einem der Ansprüche 1 bis 8, **dadurch gekennzeichnet, dass** die Eingangsweichenanordnung (11) und/oder die Ausgangsweichenanordnung (12) eine Weichenanordnung wie eine schwenkbare Platte, einen schwenkbaren Bandförderer, einen schwenkbaren Riemenförderer, einen schwenkbaren Saugbandförderer, zueinander geneigte und in oder gegen die Förderrichtung zusammenlaufende Förderflächen, einen Elevator und/oder eine Überdruckquelle zur Veränderung der Bewegungsrichtung und zur Anhebung der Waffelblätter umfasst oder umfassen.

10. Anlage nach einem der Ansprüche 1 bis 9, **dadurch gekennzeichnet, dass** die Eingangsweichenanordnung (11) und/oder die Ausgangsweichenanordnung (12) mehrere Weichenanordnungen umfasst oder umfassen.

11. Anlage nach einem der Ansprüche 1 bis 10, **dadurch gekennzeichnet, dass** die Stapelstation eine Spiralstapelvorrichtung, eine Fallschacht-Stapelvorrichtung oder eine Kombination aus einer Sandwichingvorrichtung und einer Stapelvorrichtung umfasst,
oder dass die Stapelstation (10) eine Sandwichingvorrichtung (17) umfasst, durch die ein mit einer ersten Creme bestrichenes erstes Waffelblatt (2a) oder ein mit einer zweiten Creme bestrichenes zweites Waffelblatt (2b) mit einem unbestrichenen dritten Waffelblatt (2c) bedeckt wird, sodass ein Waffelsandwich umfassend ein Waffelgrundblatt ein Waffeldeckblatt und eine dazwischenliegende Cremeschicht gebildet ist, und/oder dass die Stapelstation (10) eine Stapelvorrichtung (18) umfasst, in der ein Waffelsandwich mit zumindest einem bestrichenen ersten Waffelblatt (2a) und/oder mit zumindest einem bestrichenen zweiten Waffelblatt (2b) gestapelt wird, sodass ein mehrlagiger Waffelblock (1) gebildet ist, und/oder dass die Stapelstation (10) eine Kalibriervorrichtung oder eine Pressvorrichtung umfasst, in der die Waffelblöcke (1) und deren Bestandteile auf eine vorbestimmte oder wählbare Höhe zusammengepresst werden.

12. Anlage nach einem der Ansprüche 1 bis 11, **dadurch gekennzeichnet, dass** eine zweite Ausgangsweiche (12b) vorgesehen ist, über die die dritten Waffelblätter (2c), kommend von der dritten Förderfläche (9), an die Stapelfördervorrichtung (16) übergeben werden und insbesondere direkt in eine Sandwichingvorrichtung (17) transportiert werden, um dort mit einem ersten Waffelblatt (2a) umfassend eine erste Cremelage (3a) oder mit einem zweiten Waffelblatt (2b) umfassend eine zweite Cremelage (3b) zu einem Waffelsandwich zusammengeführt zu werden.

13. **Verfahren** zur Bildung eines Waffelblocks, der drei Waffelblätter und zumindest zwei Cremelagen aus zwei verschiedenen Cremen umfasst, wobei die Waffelblätter (2) und die Cremelagen (3) abwechselnd und parallel aufeinander liegend angeordnet werden, umfassend folgende Schritte:
- Festlegung einer gewünschten Anzahl und einer gewünschten Abfolge von ersten Waffelblättern mit jeweils einer ersten Cremelage aus einer ersten Creme und zweiten Waffelblättern mit jeweils einer zweiten Cremelage aus einer zweiten Creme,
- Befördern von Waffelblättern von der Eingangsstation zur Eingangsweichenanordnung,
- Wählen der Stellung der Eingangsweichenanordnung, sodass Waffelblätter wahlweise an die erste Förderfläche, an die zweite Förderfläche oder an die dritte Förderfläche übergeben werden,
- Auftragen der ersten Cremelage aus einer ersten Creme auf das erste Waffelblatt oder auf die ersten Waffelblätter im Verlauf der ersten Förderfläche,
- Auftragen der zweiten Cremelage aus einer zweiten Creme auf das zweite Waffelblatt oder auf die zweiten Waffelblätter im Verlauf der zweiten Förderfläche,
- Transportieren eines dritten Waffelblattes entlang der dritten Förderfläche,
**dadurch gekennzeichnet, dass** die ersten Waffelblätter mit einer ersten Cremelage, die zweiten Waffelblätter mit einer zweiten Cremelage und die dritten Waffelblätter über die Ausgangsweichenanordnung an die Stapelstation transportiert werden, sodass das oder die ersten Waffelblätter mit ihrer ersten Cremelage, das oder die zweiten Waffelblätter mit ihrer zweiten Cremelage und das dritte Waffelblatt nacheinander und in einer der festgelegten gewünschten Anzahl und Abfolge entsprechenden Anzahl und Abfolge an die Stapelstation übergeben werden.

14. Verfahren nach Anspruch 13, umfassend folgende Schritte:
Transportieren von Waffelblättern entlang des Verlaufs der ersten Förderfläche oder entlang der zweiten Förderfläche nacheinander über:
- eine Zustellfördervorrichtung
- zu einer Streichfördervorrichtung
- und weiter zu einer Abführfördervorrichtung,
wobei die Waffelblätter im Bereich der Streichfördervorrichtung eine geringere Transportgeschwindigkeit aufweisen als im Bereich der Zustellfördervorrichtung und insbesondere eine durchgehende bestreichbare Fläche bilden und Stoß an Stoß durch die Streichstation gefördert werden,
und/oder wobei die Waffelblätter im Bereich der Streichfördervorrichtung eine geringere Transportgeschwindigkeit aufweisen als im Bereich der Abführfördervorrichtung, sodass die Waffelblätter jeweils im Bereich der Zustellfördervorrichtung und/oder im Bereich der Abführfördervorrichtung einen größeren Abstand zueinander aufweisen als im Bereich der Streichfördervorrichtung.

15. Verfahren nach Anspruch 13 oder 14, **dadurch gekennzeichnet, dass** der Abstand zwischen zwei nacheinander auf der Abführfördervorrichtung beförderten Waffelblättern größer ist als das Abmaß eines Waffelblattes in Förderrichtung,
sodass über die Ausgangsweichenanordnung ein zweites Waffelblatt der zweiten Förderfläche zwischen zwei erste Waffelblätter der ersten Förderfläche positioniert werden kann
oder sodass ein erstes Waffelblatt der ersten Förderfläche zwischen zwei Waffelblätter der zweiten Förderfläche positioniert werden kann.

16. Verfahren nach einem der Ansprüche 13 bis 15, **dadurch gekennzeichnet, dass** die Beförderung der Waffelblätter in der Eingangsstation, der Stapelstation und den Streichstationen kontinuierlich erfolgt und dass die bestrichenen Waffelblätter entlang der jeweiligen Förderfläche linear aneinandergereiht befördert werden.

17. Verfahren nach einem der Ansprüche 13 bis 16, **dadurch gekennzeichnet, dass** ein Waffelblock mit x ersten Waffelblättern und y zweiten Waffelblättern und einem dritten Waffelblatt gebildet wird, sodass der Waffelblock x+y+1 Waffelblätter und x+y Cremelagen umfasst.

## Claims

1. A system for forming wafer blocks (1), said wafer blocks (1) comprising at least three wafer sheets (2) and at least two cream layers (3) consisting of two different creams, the wafer sheets (2) and the cream layers (3) being arranged alternately and lying in parallel on top of one another, comprising:
- an input station (4) at which individual wafer sheets (2), preferably coming from a wafer-baking machine, are transferred successively to the system,
- a first conveying surface (5) for transporting first wafer sheets (2a), there being along the first conveying surface (5) a first spreading station (6) for applying a first cream layer (3a) consisting of a first cream to the first wafer sheets (2a),
- a second conveying surface (7) for transporting second wafer sheets (2b), there being along the second conveying surface (7) a second spreading station (8) for applying a second cream layer (3b) consisting of a second cream to the second wafer sheets (2b),
- a third conveying surface (9) for transporting third wafer sheets (2c),
- a stacking station (10) at which the first wafer sheets (2a) with their first cream layers (3a), the second wafer sheets (2b) with their second cream layers (3b), and the third wafer sheets (2c) are stacked to form one or more wafer blocks (1),
- an input distribution guide assembly (11) via which the wafer sheets (2) from the input station (4) are transferred either to the first conveying surface (5), to the second conveying surface (7) or to the third conveying surface (9),
**characterised in that**
the system comprises an output distribution guide assembly (12) via which the wafer sheets (2) either from the first conveying surface (5), from the second conveying surface (7) or from the third conveying surface (9) are transferred to the stacking station (10) .

2. The system according to Claim 1, **characterised in that** the first conveying surface (5), the second conveying surface (7) and the third conveying surface (9) are spaced from one another and arranged adjacently to one another and/or one above the other, and the first conveying surface (5), the second conveying surface (7) and the third conveying surface (9) can be connected to one another by the input distribution guide assembly (11) and the output distribution guide assembly (12), so that a wafer sheet (2) coming from the input station (4) can be transported to the stacking station (10) either via the first conveying surface (5), via the second conveying surface (7) or via the third conveying surface (9).

3. The system according to one of Claims 1 or 2, **characterised in that** in the first conveying direction along the first conveying surface (5), upstream of the first spreading station (6), there is a first delivering conveying device (13a) for transporting the first wafer sheets (2a) to the first spreading station (6); in the first conveying direction along the first conveying surface (5), in the region of the first spreading station (6), there is a first spreading conveying device (14a) for transporting the first wafer sheets (2a) within the first spreading station (6); in the first conveying direction along the first conveying surface (5), downstream of the first spreading station (6), there is a first discharging conveying device (15a) for transporting the first wafer sheets (2a) and the first cream layer (3a) applied thereto from the first spreading station (6) to the stacking station (10); and the system is designed such that the transporting speed of the first spreading conveying device (14a) is lower than the transporting speed of the first delivering conveying device (13a) and/or is lower than the transporting speed of the first discharging conveying device (15a), so that the first wafer sheets (2a) transported successively on the first conveying surface (5) have a smaller spacing from one another in the region of the first spreading station (6) than upstream and/or downstream of the first spreading station (6) along the first conveying surface (5) and in particular form a continuous spreadable surface and are conveyed through the spreading station end to end.

4. The system according to any one of Claims 1 to 3,
**characterised in that**
- in the second conveying direction along the second conveying surface (7), upstream of the second spreading station (8), there is a second delivering conveying device (13b) for transporting the second wafer sheets (2b) to the second spreading station (8);
- in the second conveying direction along the second conveying surface (7), in the region of the second spreading station (8), there is a second spreading conveying device (14b) for transporting the second wafer sheets (2b) within the second spreading station (8);
- in the second conveying direction along the second conveying surface (7), downstream of the second spreading station (8), there is a second discharging conveying device (15b) for transporting the second wafer sheets (2b) and the second cream layer (3b) applied thereto from the second spreading station (8) to the stacking station (10);
- and the system is designed such that the transporting speed of the second spreading conveying device (14b) is lower than the transporting speed of the second delivering conveying device (13b) and/or is lower than the transporting speed of the second discharging conveying device (15b),
so that the second wafer sheets (2b) transported successively on the second conveying surface (7) have a smaller spacing from one another in the region of the second spreading station (8) than upstream and/or downstream of the second spreading station (8) along the second conveying surface (7) and in particular form a continuous spreadable surface and are conveyed through the spreading station end to end.

5. The system according to one of Claims 3 or 4, **characterised in that** the system is designed such that the spacing between two wafer sheets (2) conveyed successively on the discharging conveying device (15) is greater than the dimension of a wafer sheet (2) in the conveying direction,
so that a second wafer sheet (2b) from the second conveying surface (7) can be positioned via the output distribution guide assembly (12) between two first wafer sheets (2a) from the first conveying surface (5)
or so that a first wafer sheet (2a) from the first conveying surface (5) can be positioned via the output distribution guide assembly (12) between two second wafer sheets (2b) from the second conveying surface (7) .

6. The system according to any one of Claims 1 to 5, **characterised in that** the wafer sheets (2) are transported continuously within the input station (4), the stacking station (10) and the spreading stations (6, 8), and the coated wafer sheets (2) are transported along the conveying surface (5, 7, 9) in question in a lined-up manner.

7. The system according to any one of Claims 1 to 6, **characterised in that** the system is designed such that the transporting speed of the stacking conveying device (16) is greater than the transporting speed of the spreading conveying device (14) and in particular is greater than or equal to the sum of the average transporting speeds of the first conveying surface (5) plus the transporting speeds of the second conveying surface (7) plus the transporting speeds of the third conveying surface (9), so that the wafer sheets (2) are conveyed into the stacking station (10) spaced from one another.

8. The system according to any one of Claims 1 to 7, **characterised in that** the delivering conveying device (13), the spreading conveying device (14), the discharging conveying device (15) and/or the stacking conveying device (16) comprises or comprise one or more wide-belt conveyors, one or more belt conveyors or one or more suction belt conveyors.

9. The system according to any one of Claims 1 to 8, **characterised in that** the input distribution guide assembly (11) and/or the output distribution guide assembly (12) comprises or comprise a distribution guide assembly such as a pivotable plate, a pivotable wide-belt conveyor, a pivotable belt conveyor, a pivotable suction belt conveyor, conveying surfaces which are inclined towards one another and converge in or counter to the conveying direction, an elevator and/or a positive pressure source for changing the movement direction and for lifting the wafer sheets.

10. The system according to any one of Claims 1 to 9, **characterised in that** the input distribution guide assembly (11) and/or the output distribution guide assembly (12) comprises or comprise multiple distribution guide assemblies.

11. The system according to any one of Claims 1 to 10, **characterised in that** the stacking station comprises a spiral stacking device, a drop shaft stacking device or a combination of a sandwiching device and a stacking device,
or the stacking station (10) comprises a sandwiching device (17) by which a first wafer sheet (2a) coated with a first cream or a second wafer sheet (2b) coated with a second cream is covered with an uncoated third wafer sheet (2c), so that a wafer sandwich comprising a wafer bottom sheet, a wafer top sheet and a cream layer therebetween is formed,
and/or the stacking station (10) comprises a stacking device (18) in which a wafer sandwich with at least one coated first wafer sheet (2a) and/or with at least one coated second wafer sheet (2b) is stacked, so that a multi-layered wafer block (1) is formed,
and/or the stacking station (10) comprises a calibration device or a pressing device in which the wafer blocks (1) and the constituents thereof are compressed to a predefined or selectable height.

12. The system according to any one of Claims 1 to 11, **characterised in that** a second output distribution guide (12b) is provided, via which the third wafer sheets (2c) coming from the third conveying surface (9) are transferred to the stacking conveying device (16) and in particular are transported directly into a sandwiching device (17) in order to be combined there with a first wafer sheet (2a) comprising a first cream layer (3a) or with a second wafer sheet (2b) comprising a second cream layer (3b) to form a wafer sandwich.

13. A method for forming a wafer block which comprises three wafer sheets and at least two cream layers consisting of two different creams, the wafer sheets (2) and the cream layers (3) being arranged alternately and lying in parallel on top of one another, comprising the following steps:
- defining a desired number and a desired sequence of first wafer sheets, each having a first cream layer consisting of a first cream, and second wafer sheets, each having a second cream layer consisting of a second cream,
- conveying wafer sheets from the input station to the input distribution guide assembly,
- selecting the position of the input distribution guide assembly so that wafer sheets are transferred either to the first conveying surface, to the second conveying surface or to the third conveying surface,
- applying the first cream layer consisting of a first cream to the first wafer sheet or to the first wafer sheets along the first conveying surface,
- applying the second cream layer consisting of a second cream to the second wafer sheet or to the second wafer sheets along the second conveying surface,
- transporting a third wafer sheet along the third conveying surface, **characterised in that** the first wafer sheets with a first cream layer, the second wafer sheets with a second cream layer, and the third wafer sheets are transported via the output distribution guide assembly to the stacking station, so that the first wafer sheet(s) with their first cream layer, the second wafer sheet(s) with their second cream layer, and the third wafer sheet are transferred to the stacking station successively and in a number and sequence corresponding to the defined desired number and sequence.

14. The method according to Claim 13, comprising the following steps:
transporting wafer sheets along the first conveying surface or along the second conveying surface successively via:
- a delivering conveying device
- to a spreading conveying device
- and further to a discharging conveying device,
wherein the wafer sheets have a lower transporting speed in the region of the spreading conveying device than in the region of the delivering conveying device and in particular form a continuous spreadable surface and are conveyed through the spreading station end to end,
and/or wherein the wafer sheets have a lower transporting speed in the region of the spreading conveying device than in the region of the discharging conveying device, so that the wafer sheets have a larger spacing from one another in the region of the delivering conveying device and/or in the region of the discharging conveying device than in the region of the spreading conveying device.

15. The method according to Claim 13 or 14, **characterised in that** the spacing between two wafer sheets conveyed successively on the discharging conveying device is greater than the dimension of a wafer sheet in the conveying direction,
so that via the output distribution guide assembly a second wafer sheet from the second conveying surface can be positioned between two first wafer sheets from the first conveying surface,
or so that a first wafer sheet from the first conveying surface can be positioned between two second wafer sheets from the second conveying surface.

16. The method according to any one of Claims 13 to 15, **characterised in that** the wafer sheets are conveyed continuously within the input station, the stacking station and the spreading stations, and the coated wafer sheets are conveyed along the conveying surface in question in a lined-up manner.

17. The method according to any one of Claims 13 to 16, **characterised in that** a wafer block having x first wafer sheets and y second wafer sheets and a third wafer sheet is formed, so that the wafer block comprises x+y+1 wafer sheets and x+y cream layers.

## Revendications

1. Installation destinée à former des blocs de gaufrettes (1), dans laquelle les blocs de gaufrettes (1) comportent au moins trois feuilles de gaufrettes (2) et au moins deux couches de crème (3) composées de deux crèmes différentes, dans laquelle les feuilles de gaufrettes (2) et les couches de crème (3) sont disposées alternativement et parallèlement les unes sur les autres, comprenant :
- une station d'entrée (4) sur laquelle des feuilles de gaufrettes (2) individuelles, provenant de préférence d'une machine de cuisson de gaufrettes, sont délivrées successivement à l'installation,
- une première surface de transport (5) pour le transport de premières feuilles de gaufrettes (2a), une première station d'enduction (6) étant prévue dans l'étendue de la première surface de transport (5), pour l'application d'une première couche de crème (3a) constituée d'une première crème sur les premières feuilles de gaufrettes (2a),
- une deuxième surface de transport (7) pour le transport de deuxièmes feuilles de gaufrettes (2b), une deuxième station d'enduction (8) étant prévue dans l'étendue de la deuxième surface de transport (7), pour l'application d'une deuxième couche de crème (3b) constituée d'une deuxième crème sur les deuxièmes feuilles de gaufrettes (2b),
- une troisième surface de transport (9) pour le transport de troisièmes feuilles de gaufrettes (2c),
- une station d'empilage (10) sur laquelle les premières feuilles de gaufrettes (2a) avec leurs premières couches de crème (3a), les deuxièmes feuilles de gaufrettes (2b) avec leurs deuxièmes couches de crème (3b) et les troisièmes feuilles de gaufrettes (2c) sont empilées en un ou plusieurs blocs de gaufrettes (1),
- un système d'aiguillage d'entrée (11) destiné à délivrer les feuilles de gaufrettes (2) de la station d'entrée (4) sélectivement à la première surface de transport (5), à la deuxième surface de transport (7) ou à la troisième surface de transport (9),
**caractérisée en ce que** l'installation comporte un système d'aiguillage de sortie (12) destiné à délivrer les feuilles de gaufrettes (2) de la première surface de transport (5), de la deuxième surface de transport (7) ou de la troisième surface de transport (9) sélectivement à la station d'empilage (10).

2. Installation selon la revendication 1, **caractérisée en ce que** la première surface de transport (5), la deuxième surface de transport (7) et la troisième surface de transport (9) sont disposées à distance les unes des autres, côte à côte et/ou superposées, et **en ce que** la première surface de transport (5), la deuxième surface de transport (7) et la troisième surface de transport (9) peuvent être reliées entre elles par le système d'aiguillage d'entrée (11) et le système d'aiguillage de sortie (12), de telle façon qu'une feuille de gaufrette (2) venant de la station d'entrée (4) peut être transportée vers la station d'empilage (10) sélectivement par la première surface de transport (5), la deuxième surface de transport (7) ou la troisième surface de transport (9).

3. Installation selon l'une des revendications 1 ou 2, **caractérisée en ce que** dans l'étendue de la première surface de transport (5), le long de la première direction de transport en amont de la première station d'enduction (6), il est prévu un premier dispositif de transport de distribution (13a) destiné à transporter les premières feuilles de gaufrettes (2a) vers la première station d'enduction (6), **en ce que** dans l'étendue de la première surface de transport (5), le long de la première direction de transport, dans la région de la première station d'enduction (6), il est prévu un premier dispositif de transport d'enduction (14a) destiné à transporter les premières feuilles de gaufrettes (2a) dans la première station d'enduction (6), **en ce que** dans l'étendue de la première surface de transport (5), le long de la première direction de transport en aval de la première station d'enduction (6), il est prévu un premier dispositif de transport d'évacuation (15a) destiné à transporter les premières feuilles de gaufrettes (2a) et la première couche de crème (3a) appliquée sur celles-ci de la première station d'enduction (6) vers la station d'empilage (10), et **en ce que** l'installation est conçue de telle façon que la vitesse de transport du premier dispositif de transport d'enduction (14a) est inférieure à la vitesse de transport du premier dispositif de transport de distribution (13a) et/ou inférieure à la vitesse de transport du premier dispositif de transport d'évacuation (15a), de telle façon que les premières feuilles de gaufrettes (2a) transportées successivement sur la première surface de transport (5) présentent un plus petit espacement mutuel dans la région de la première station d'enduction (6) que dans l'étendue de la première surface de transport (5) en amont et/ou en aval de la première station d'enduction (6) et forment en particulier une surface continue apte à être enduite, tout en étant transportées pile contre pile à travers la station d'enduction.

4. Installation selon l'une des revendications 1 à 3, **caractérisée en ce que**
- dans l'étendue de la deuxième surface de transport (7), le long de la deuxième direction de transport en amont de la deuxième station d'enduction (8), il est prévu un deuxième dispositif de transport de distribution (13b) destiné à transporter les deuxièmes feuilles de gaufrettes (2b) vers la deuxième station d'enduction (8),
- dans l'étendue de la deuxième surface de transport (7), le long de la deuxième direction de transport dans la région de la deuxième station d'enduction (8), il est prévu un deuxième dispositif de transport d'enduction (14b) destiné à transporter les deuxièmes feuilles de gaufrettes (2b) dans la deuxième station d'enduction (8),
- dans l'étendue de la deuxième surface de transport (7), le long de la deuxième direction de transport en aval de la deuxième station d'enduction (8), il est prévu un deuxième dispositif de transport d'évacuation (15b) destiné à transporter les deuxièmes feuilles de gaufrettes (2b) et la deuxième couche de crème (3b) appliquée sur celles-ci de la deuxième station d'enduction (8) vers la station d'empilage (10), et
- l'installation est conçue de telle façon que la vitesse de transport du deuxième dispositif de transport d'enduction (14b) est inférieure à la vitesse de transport du deuxième dispositif de transport de distribution (13b) et/ou inférieure à la vitesse de transport du deuxième dispositif de transport d'évacuation (15b),
de telle façon que les deuxièmes feuilles de gaufrettes (2b) transportées successivement sur la deuxième surface de transport (7) présentent un plus petit espacement mutuel dans la région de la deuxième station d'enduction (8) que dans l'étendue de la deuxième surface de transport (7) en amont et/ou en aval de la deuxième station d'enduction (8) et forment en particulier une surface continue apte à être enduite, tout en étant transportées pile contre pile à travers la station d'enduction.

5. Installation selon l'une des revendications 3 ou 4, **caractérisée en ce que** l'installation est conçue de telle façon que l'espacement entre deux feuilles de gaufrettes (2) transportées successivement sur le dispositif de transport d'évacuation (15) est supérieur à la dimension d'une feuille de gaufrette (2) dans la direction de transport,
de telle façon que le système d'aiguillage de sortie (12) permet de positionner une deuxième feuille de gaufrette (2b) de la deuxième surface de transport (7) entre deux premières feuilles de gaufrettes (2a) de la première surface de transport (5),
ou de telle façon que le système d'aiguillage de sortie (12) permet de positionner une première feuille de gaufrette (2a) de la première surface de transport (5) entre deux deuxièmes feuilles de gaufrettes (2b) de la deuxième surface de transport (7).

6. Installation selon l'une des revendications 1 à 5, **caractérisée en ce que** le transport des feuilles de gaufrettes (2) est réalisé de façon continue dans la station d'entrée (4), la station d'empilage (10) et les stations d'enduction (6, 8), et **en ce que** les feuilles de gaufrettes (2) enduites sont transportées le long de la surface de transport respective (5, 7, 9) en étant juxtaposées linéairement.

7. Installation selon l'une des revendications 1 à 6, **caractérisée en ce que** l'installation est conçue de telle façon que la vitesse de transport du dispositif de transport d'empilage (16) est supérieure à la vitesse de transport du dispositif de transport d'enduction (14), et en particulier supérieure ou égale à la somme des vitesses de transport moyennes de la première surface de transport (5) plus les vitesses de transport de la deuxième surface de transport (7) plus les vitesses de transport de la troisième surface de transport (9), de telle façon que les feuilles de gaufrettes (2) sont transportées en étant espacées les unes des autres dans la station d'empilage (10).

8. Installation selon l'une des revendications 1 à 7, **caractérisée en ce que** le dispositif de transport de distribution (13), le dispositif de transport d'enduction (14), le dispositif de transport d'évacuation (15) et/ou le dispositif de transport d'empilage (16) comporte ou comportent un ou plusieurs convoyeurs à bande, un ou plusieurs convoyeurs à courroie ou un ou plusieurs convoyeurs à bande aspirante.

9. Installation selon l'une des revendications 1 à 8, **caractérisée en ce que** le système d'aiguillage d'entrée (11) et/ou le système d'aiguillage de sortie (12) comporte ou comportent un système d'aiguillage tel qu'une plaque pivotante, un convoyeur à bande pivotant, un convoyeur à courroie pivotant, un convoyeur à bande aspirante pivotant, des surfaces de transport inclinées les unes vers les autres et convergeant dans la direction de transport ou contre celle-ci, un élévateur et/ou une source de surpression destinée à modifier la direction de transport ou à soulever les feuilles de gaufrettes.

10. Installation selon l'une des revendications 1 à 9, **caractérisée en ce que** le système d'aiguillage d'entrée (11) et/ou le système d'aiguillage de sortie (12) comporte ou comportent plusieurs systèmes d'aiguillage.

11. Installation selon l'une des revendications 1 à 10, **caractérisée en ce que** la station d'empilage comporte un dispositif d'empilage à spirale, un dispositif d'empilage à puits de chute ou une combinaison entre un dispositif de mise en sandwich et un dispositif d'empilage,
ou **en ce que** la station d'empilage (10) comporte un dispositif de mise en sandwich (17) permettant d'appliquer une troisième feuille de gaufrette (2c) non enduite sur une première feuille de gaufrette (2a) enduite avec une première crème ou une deuxième feuille de gaufrette (2b) enduite avec une deuxième crème, de manière à former un sandwich de gaufrette comportant une feuille de fond de gaufrette, une feuille de couverture de gaufrette et une couche de crème intermédiaire,
et/ou **en ce que** la station d'empilage (10) comporte un dispositif d'empilage (18) dans lequel un sandwich de gaufrettes avec au moins une première feuille de gaufrette (2a) enduite et/ou avec au moins une deuxième feuille de gaufrette (2b) enduite est empilé, de manière à former un blocs de gaufrettes (1) à plusieurs couches,
et/ou **en ce que** la station d'empilage (10) comporte un dispositif de calibrage ou un dispositif de pressage, dans lequel les blocs de gaufrettes (1) et leurs composants sont pressés ensemble de manière à obtenir une hauteur prédéfinie ou sélectionnable.

12. Installation selon l'une des revendications 1 à 11, **caractérisée en ce qu'**il est prévu un deuxième système d'aiguillage de sortie (12b) au moyen duquel les troisièmes feuilles de gaufrettes (2c) venant de la troisième surface de transport (9) sont délivrées au dispositif de transport d'empilage (16) et transportées en particulier directement dans un dispositif de mise en sandwich (17), pour y être assemblées en un sandwich de gaufrette avec une première feuille de gaufrette (2a) comportant une première couche de crème (3a) ou avec une deuxième feuille de gaufrette (2b) comportant une deuxième couche de crème (3b).

13. Procédé pour la formation d'un bloc de gaufrettes comportant trois feuilles de gaufrettes et au moins deux couches de crème composées de deux crèmes différentes, dans lequel les feuilles de gaufrettes (2) et les couches de crème (3) sont superposées alternativement et parallèlement les unes aux autres, comprenant les étapes suivantes :
- détermination d'un nombre souhaité et d'un ordre souhaité de premières feuilles de gaufrettes respectivement avec une première couche de crème composée d'une première crème et de deuxièmes feuilles de gaufrettes respectivement avec une deuxième couche de crème composée d'une deuxième crème,
- transport de feuilles de gaufrettes de la station d'entrée jusqu'au système d'aiguillage d'entrée,
- sélection de la position du système d'aiguillage d'entrée de manière à délivrer des feuilles de gaufrettes sélectivement à la première surface de transport, à la deuxième surface de transport ou à la troisième surface de transport,
- application de la première couche de crème composée d'une première crème sur la première feuille de gaufrette ou sur les premières feuilles de gaufrettes dans l'étendue de la première surface de transport,
- application de la deuxième couche de crème composée d'une deuxième crème sur la deuxième feuille de gaufrette ou sur les deuxièmes feuilles de gaufrettes dans l'étendue de la deuxième surface de transport,
- transport d'une troisième feuille de gaufrette le long de la troisième surface de transport, **caractérisé en ce que** les premières feuilles de gaufrettes avec une première couche de crème, les deuxièmes feuilles de gaufrettes avec une deuxième couche de crème et les troisièmes feuilles de gaufrettes sont transportées vers la station d'empilage par le biais du système d'aiguillage de sortie, de façon à délivrer la ou les première(s) feuille(s) de gaufrette(s) avec leur première couche de crème, la ou les deuxième(s) feuille(s) de gaufrette(s) avec leur deuxième couche de crème et la troisième feuille de gaufrette successivement et selon un nombre et un ordre correspondant au nombre et à l'ordre souhaités déterminés à la station d'empilage.

14. Procédé selon la revendication 13, comprenant les étapes suivantes :
transport de feuilles de gaufrettes le long de l'étendue de la première surface de transport ou le long de la deuxième surface de transport, successivement par :
- un dispositif de transport de distribution,
- vers un dispositif de transport d'enduction
- et plus loin vers un dispositif de transport d'évacuation,
dans lequel les feuilles de gaufrettes présentent une vitesse de transport plus réduite dans la région du dispositif de transport d'enduction que dans la région du dispositif de transport de distribution et forment en particulier une surface continue apte à être enduite, tout en étant transportées pile contre pile à travers la station d'enduction,
et/ou dans lequel les feuilles de gaufrettes présentent une vitesse de transport plus réduite dans la région du dispositif de transport d'enduction que dans la région du dispositif de transport d'évacuation, de telle façon que les feuilles de gaufrettes présentent respectivement un espacement mutuel plus grand dans la région du dispositif de transport de distribution et/ou dans la région du dispositif de transport d'évacuation que dans la région du dispositif de transport d'enduction.

15. Procédé selon la revendication 13 ou 14, **caractérisé en ce que** l'espacement entre deux feuilles de gaufrettes transportées successivement sur le dispositif de transport d'évacuation est supérieur à la dimension d'une feuille de gaufrette dans la direction de transport,
de telle façon que le système d'aiguillage de sortie permet de positionner une deuxième feuille de gaufrette de la deuxième surface de transport entre deux premières feuilles de gaufrettes de la première surface de transport,
ou de telle façon qu'une première feuille de gaufrette de la première surface de transport peut être positionnée entre deux feuilles de gaufrettes de la deuxième surface de transport.

16. Procédé selon l'une des revendications 13 à 15, **caractérisé en ce que** le transport des feuilles de gaufrettes dans la station d'entrée, la station d'empilage et les stations d'enduction est réalisé de façon continue, et **en ce que** les feuilles de gaufrettes enduites sont transportées le long de la surface de transport respective en étant juxtaposées linéairement.

17. Procédé selon l'une des revendications 13 à 16, **caractérisé en ce qu'**un bloc de gaufrette est formé avec x premières feuilles de gaufrettes et y deuxièmes feuilles de gaufrettes et une troisième feuille de gaufrette, de sorte que le bloc de gaufrette comporte x + y + 1 feuilles de gaufrettes et x + y couches de crème.
